(19) Europäisches Patentamt
European Patent Office
Office européen des brevets

(11) **EP 3 918 538 B1**

(12) **EUROPEAN PATENT SPECIFICATION**

(45) Date of publication and mention
of the grant of the patent:
**05.08.2026   Bulletin 2026/32**

(21) Application number: **19702614.9**

(22) Date of filing: **01.02.2019**

(51) International Patent Classification (IPC):
***G06N 10/40*** *(2022.01)*

(52) Cooperative Patent Classification (CPC):
**G06N 10/40**

(86) International application number:
**PCT/EP2019/052528**

(87) International publication number:
**WO 2020/156680 (06.08.2020 Gazette 2020/32)**

(54) **METHOD AND APPARATUS FOR PERFORMING A QUANTUM COMPUTATION**

VERFAHREN UND VORRICHTUNG ZUR DURCHFÜHRUNG EINER QUANTENBERECHNUNG

PROCÉDÉ ET APPAREIL PERMETTANT DE RÉALISER UN CALCUL QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.12.2021   Bulletin 2021/49**

(73) Proprietor: **Parity Quantum Computing GmbH 6020 Innsbruck (AT)**

(72) Inventor: **LECHNER, Wolfgang 6063 Rum (AT)**

(74) Representative: **Zimmermann & Partner Patentanwälte mbB Postfach 330 920 80069 München (DE)**

(56) References cited:
**EP-A1- 3 113 084**

• **AGUADO M ET AL: "Creation, manipulation, and detection of Abelian and non-Abelian anyons in optical lattices", ARXIV.ORG, CORNELL UNIVERSITY LIBRARY, 201 OLIN LIBRARY CORNELL UNIVERSITY ITHACA, NY 14853, 21 February 2008 (2008-02-21), XP080401524, DOI: 10.1103/PHYSREVLETT.101.260501**
• **TIMOTHY J PROCTOR ET AL: "Hybrid quantum computing with ancillas", ARXIV.ORG, CORNELL UNIVERSITY LIBRARY, 201 OLIN LIBRARY CORNELL UNIVERSITY ITHACA, NY 14853, 1 April 2016 (2016-04-01), XP080692810, DOI: 10.1080/00107514.2016.1152700**
• **WOLFGANG LECHNER: "Quantum Approximate Optimization with Parallelizable Gates", ARXIV.ORG, CORNELL UNIVERSITY LIBRARY, 201 OLIN LIBRARY CORNELL UNIVERSITY ITHACA, NY 14853, 4 February 2018 (2018-02-04), XP081222834**

## Description

FIELD

Embodiments described herein relate to apparatuses and methods for performing a quantum computation, more specifically apparatuses and methods for computing solutions to computational problems using a quantum system, more specifically a quantum system including a plurality of quantum bits (qubits).

BACKGROUND

Quantum computing devices are computing devices which make use of quantum mechanical effects to solve computational problems. In a quantum computing device, or quantum computer, information is carried by quantum systems, such as e.g. quantum bits ("qubits"). This is in contrast to conventional computers, which operate with classical bits, i.e. 0 and 1. During a quantum computation, quantum bits can be processed by evolving the quantum system. For example, groups of qubits of the quantum system can be coupled to each other according to a specified interaction. By evolving the quantum system, the information carried by the quantum system can be processed in order to carry out a computation, i.e. in order to solve a computational problem. In many cases, a quantum computer can be assisted by a classical computer, i.e. a computer operating with classical bits. The classical computer can provide instructions to the quantum computer as to how the qubits in the system are to be processed by the quantum computer.

In many approaches to quantum computation, in order to carry out an arbitrary quantum computation it is necessary to perform long-range interactions. Long-range interactions are interactions that couple qubits which are far apart from each other in the quantum system. Such long-range interactions provide an obstacle, since their practical realization is difficult. In some set-ups, long-range interactions can be replaced by sequences of short-range interactions. Yet, these approaches have the disadvantage that the sequences of short-range interactions are inherently sequential, i.e. they cannot be parallelized, leading to an increased runtime of the quantum computation. In turn, the fact that such sequences cannot be parallelized can compromise the scalability of the quantum computers based on such principles.

Alternatively, some approaches to quantum computing use short-range interactions only, but have the disadvantage that they are not fully programmable. That is, such quantum computers are restricted in the sense that they are tailored to solve certain specific computational problems, but they are not capable of solving arbitrary computational problems.

Lechner, W., "Quantum approximate optimization with parallelizable gates", Arxiv.org, Cornell University Library, 4 February 2018, describes a scheme to parallelize the quantum approximate optimization algorithm (QAOA) for arbitrary all-to-all connected problem graphs in a layout of quantum bits (qubits) with nearest neighbor interactions. The protocol consisting of single qubit operations that encode the optimization problem and all interactions are problem-independent pair-wise CNOT gates among nearest neighbors. This allows for a parallelizable implementation in quantum devices with a square lattice geometry. The basis of this proposal is a lattice gauge model which also introduces additional parameters and protocols for QAOA to improve the efficiency. EP 3 113 084 A1 describes a quantum processing device and method. Aguado et al, "Creation, manipulation, and detection of Abelian and non-Abelian anyons in optical lattices", Arxiv.org, Cornell University Library, 21 February 2008, describes how to simulate the creation and manipulation of Abelian and non-Abelian anyons in topological lattice models using trapped atoms in optical lattices. The proposal requires an ancilla particle which can undergo single-particle gates, be moved close to each constituent of the lattice and undergo a quantum gate, and be detected. Proctor et al, "Hybrid quantum computing with ancillas", Arxiv.org, Cornell University Library, 1 April 2016, describes an overview of the basic concepts of the gate model quantum computer architecture, including the different possible forms of information encodings - from base two up to continuous variables - and a more detailed description of how the main types of ancilla-mediated quantum operations provide efficient quantum gates.

Therefore, there is a need for improved methods and devices for performing a quantum computation.

SUMMARY

According to an embodiment, a method of performing a quantum computation is provided, as defined in independent claim 1.

According to a further embodiment, an apparatus for quantum computing is provided, as defined in independent claim 12.

Embodiments are also directed to methods for operating the disclosed systems and devices, and to the use of the disclosed system to perform the methods according to the embodiments described herein.

Further advantages, features, aspects and details that can be combined with embodiments described herein are evident from the dependent claims, the description and the drawings.

## BRIEF DESCRIPTION OF THE DRAWINGS

A full and enabling disclosure to one of ordinary skill in the art is set forth more particularly in the remainder of the specification including reference to the accompanying drawings wherein:

FIGs. 1-3 show examples of quantum systems including a plurality of qubits according to embodiments described herein;

FIG. 4 illustrates the notion of a single-body Hamiltonian according to embodiments described herein;

FIG. 5 illustrates the notion of an elementary distance of a lattice according to embodiments described herein;

FIG. 6 shows examples of short-range Hamiltonians according to embodiments described herein;

FIG. 7 illustrates the notion of depth of a product of unitary operators according to embodiments described herein;

FIG. 8 shows an apparatus for quantum computing according to embodiments described herein;

FIGs. 9-12 illustrate specific encodings of a computational problem into a problem Hamiltonian according to embodiments described herein;

FIGs. 13-17 and 18(a)-(d) illustrate specific implementations of short-range unitary operators according to embodiments described herein;

FIGs. 19(a)-(c) illustrate the notion of shuttling of ancillary particles according to embodiments described herein.

## DETAILED DESCRIPTION

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the following description of the drawings, the same reference numbers refer to the same components. Generally, only the differences with respect to the individual embodiments are described. The structures shown in the drawings are not necessarily depicted true to scale, and may contain details drawn in an exaggerated way to allow for a better understanding of the embodiments.

Embodiments described herein involve a quantum system including a plurality of qubits. A qubit, as described herein, is a quantum mechanical two-level system. A qubit may include two quantum basis states $|0>$ and $|1>$ representing possible quantum states of the qubit. According to the superposition principle of quantum mechanics, every superposition of the form $a|0> + b|1>$ is a possible quantum state of the qubit. Therein, a and b are complex numbers. Mathematically, a qubit may be represented by a two-dimensional vector space. A plurality of qubits may have quantum basis states corresponding to configurations in which each qubit of the plurality of qubits is either in the quantum state $|0>$ or in the quantum state $|1>$. Considering, for example, a plurality of five qubits, an exemplary quantum basis state for the 5 qubits may be $|00101>$. Therein, the quantum state $|00101>$ represents a configuration wherein the first, second and fourth qubit are in the quantum state $|0>$ and the third and fifth qubit are in the quantum state $|1>$. For a plurality of m qubits, there are $2^m$ quantum basis states. In view of the superposition principle, given two quantum states for a plurality of qubits, a superposition of the quantum basis states is also a quantum state for the plurality of qubits. For example, a superposition of the form $a|00101> + b|11110> + c|11111>$, with a, b and c complex numbers, is a quantum state for the plurality of qubits. Mathematically, a quantum system consisting of a plurality of m qubits can be represented by a $2^m$-dimensional vector space.

A plurality of qubits, as described herein, may include or consist of a plurality of superconducting qubits, e.g. transmon or flux qubits. A superconducting qubit may include a primary and a secondary superconducting loop. Superconducting currents propagating clockwise and counter-clockwise, respectively, in the primary superconducting loop can form the quantum basis states $|1>$ and $|0>$ of the superconducting qubit. Further, a magnetic flux bias through the secondary superconducting loop can couple the quantum basis states $|0>$ and $|1>$.

Alternatively, a quantum system as described herein may be realized using a system of trapped ions. In this case, the quantum basis states $|0>$ and $|1>$ of a qubit are formed by two levels of a Zeeman- or hyperfine manifold or across a forbidden optical transition of alkaline earth, or alkaline earth-like positively charged ions, such as Ca40+.

As yet a further alternative, a quantum system as described herein may be realized using ultracold atoms, e.g. ultracold neutral Alkali atoms, which are trapped in an optical lattice or large spacing lattices from laser fields. The atoms can be evolved towards a ground state using laser cooling. The quantum basis states of a qubit are formed by the ground state of an atom and a high-lying Rydberg state. The qubits can be addressed by laser light.

As yet a further alternative, a quantum system as described herein may be realized with quantum dots. Quantum Dot Qubits may be fabricated from GaAs/AlGaAs heterostructures. The qubits are encoded in spin states, which may be prepared by adiabatically tuning the potential from a single well to a double well potential.

As yet a further alternative, a quantum system as described herein may be realized with impurities in solid-state crystals, such as NV Centers, which are point defects in diamond crystals. Other impurities are being investigated, e.g., color centers tied to chromium impurities, rare-earth ions in solid-state crystals, or defect centers in silicon carbide. NV Centers have two unpaired electrons, which provides a spin-1 ground state that allows the identification of two sharp defect levels with large life times that can be used to realize a qubit, possibly in conjunction with the surrounding nuclear spins.

According to embodiments, the quantum system may include one or more, or a plurality of individual q-level quantum systems, wherein q may be a constant. For example, q may be in the range from 2 to 8, e.g., 3, 4, 5, or 6. An individual q-level quantum system may include a basis consisting of q states |0>, |1>, ... |q-1>. An individual 3-level quantum system will be referred to as a "qutrit".

A Hamiltonian of a quantum system can represent an interaction or a plurality of interactions for the quantum system. A Hamiltonian is an operator acting on the quantum system. Eigenvalues of a Hamiltonian correspond to an energy spectrum of the quantum system. The ground state of a Hamiltonian is the quantum state of the quantum system with minimal energy. The ground state of a Hamiltonian may be a quantum state at zero temperature.

Embodiments described herein involve the notion of a unitary operator acting on a quantum system. A unitary operator is an operator (matrix) acting on the quantum system. A unitary operator corresponds to a coherent time evolution of a quantum system. If the quantum system is initially in a state $|\psi\rangle$, evolving the quantum system by a unitary operator U means that the state of the quantum system after the unitary operator has been performed is $U|\psi\rangle$. If H is a Hamiltonian of the quantum system, the operator $\exp(itH)$ is a unitary operator. Therein, t is a time parameter and $\exp(\cdot)$ is the exponential function. A unitary operator of the form $\exp(itH)$ shall be referred to herein as a unitary time evolution according to the Hamiltonian H. According to embodiments, a quantum system may be evolved by a unitary time evolution of a Hamiltonian, e.g. the problem Hamiltonian as described herein. Evolving the quantum system by a unitary time evolution $\exp(itH)$ of a Hamiltonian H may include switching on an interaction between the plurality of qubits, wherein the interaction is defined by the Hamiltonian H. The interaction may be switched on for a time period t. The interaction may be switched off after the time period t has elapsed.

In any realistic system, at least a small amount of noise is always present. Accordingly, a unitary operator, such as a unitary time evolution of the problem Hamiltonian or a short-range unitary operator as described herein, cannot be performed with 100% accuracy. It shall be understood that the term "unitary operator" also encompasses unitary operators which are performed within a small margin of error, i.e. unitary operators performed in the present of small amounts of noise.

A classical computing system, as described herein, may refer to a computing system operating with classical bits. A classical computing system may include a central processing unit (CPU) for processing information with classical bits and/or a memory for storing information with classical bits. A classical computing system may include one or more conventional computers and/or a network of conventional computers, such as personal computers (PCs).

Embodiments described herein relate to gate-based quantum computing. A method as described herein may be a method for performing a gate-based quantum computation. An apparatus as described herein may be an apparatus for gate based-quantum computing. Gate-based quantum computing, or digital quantum computing, refers to a method of computation wherein the quantum computation is driven by sequences of unitary operators. Gate-based quantum computing is distinguished from other approaches, such as e.g. adiabatic quantum computation (quantum annealing) or measurement-based quantum computation, wherein a quantum computation is driven by adiabatic evolution or sequences of measurements, respectively.

For the sake of intelligibility, but without intending to limit the scope, in the following an overview is given of the method of quantum computation provided in the present disclosure. Thereafter, a detailed description of embodiments will be provided.

The method of quantum computing described herein is designed to compute a solution to a computational problem. The computational problem may, e.g., be the travelling salesman problem or the Ising spin model problem, which are both NP-hard problems.

The method involves providing a quantum system comprising a plurality of qubits, e.g. a plurality of superconducting qubits arranged on a two-dimensional lattice.

The method includes performing N rounds of operations. In each round, the quantum system is evolved according to a sequence of unitary operators taken from a specific family F of unitary operators. For each round, evolving the quantum system by the sequence of unitary operators may be followed by performing a measurement of the quantum system. After the measurement has been performed, a sequence of unitary operators to be applied to the quantum system in a next round of operations is determined. The sequence of unitary operators for the next round may be different from the sequence of unitary operators of the current round, or may be the same as the sequence of unitary operators of the current round.

Which particular sequence of unitary operations is applied in each round may depend on several aspects depending on the design of the algorithm. In some cases, the sequence of unitary operators which is to be applied in a round of operations may depend on measurement outcome(s) of one or more measurements performed in a previous round of operations. In other words, the method can involve a feed-forward of information from one round of operations to the next, wherein measurement outcomes(s) obtained in a previous round are used to determine which unitary operations to apply in a next round.

The family F from which the unitary operators of each round are chosen includes two types of operators, namely unitary time evolutions of a problem Hamiltonian and products of short-range unitary operators.

The problem Hamiltonian as described herein is a single-body Hamiltonian which encodes the computational problem to be solved. That is, at an initial ("pre-processing") stage of the computation, the computational problem to be solved can be mapped, by a classical computing system, to the problem Hamiltonian. Several approaches for designing a problem Hamiltonian can be provided. For example, the problem Hamiltonian can have the form $H^{prob} = \Sigma_k J_k \sigma_z^{(k)}$, wherein $\sigma_z^{(k)}$ is a Pauli operator acting on a k-th qubit of the plurality of qubits, and wherein each $J_k$ is an adjustable parameter determined by one or more external entities, e.g. magnetic fields, which can be adjusted at every qubit k individually. For example, $J_k$ may be the strength of an adjustable magnetic field influencing the k-th qubit. A plurality of adjustable external entities, e.g. magnetic fields, may be provided, wherein each adjustable external entity influences a single qubit of the plurality of qubits. By adjusting the external entities, the parameters $J_k$ can be adjusted depending on the computational problem.

The short-range operators involve interactions between groups of qubits which are close to each other, e.g. interactions between nearest-neighbor qubits arranged on a 2-dimensional lattice. Different from the problem Hamiltonian, the short-range unitary operators may be independent of the computational problem.

The inventors have found that the family F has the property that there exists at least one sequence of unitary operators taken from the family F such that the quantum system, when evolved according to said sequence of unitary operators, results in a quantum state which, when measured, reveals a solution of the computational problem. A priori it may not be evident which particular sequence of unitary operators has the property in question. According to aspects of the present disclosure, a suitable sequence of unitary operators is searched within the family F by performing several rounds of operations in which different sequences of unitary operators from the family F are performed. Accordingly, an iterative process, or variational method, is provided. When carried for a sufficiently long time, this process will result in a target quantum state which, when measured, provides a solution to the computational problem.

In light of the above, according to an embodiment, a method of performing a quantum computation is provided. The method includes providing a quantum system comprising a plurality of qubits. The method includes encoding a computational problem into a problem Hamiltonian of the quantum system. The problem Hamiltonian is a single-body Hamiltonian comprising a plurality of adjustable parameters. The encoding includes determining, from the computational problem, a problem-encoding configuration for the plurality of adjustable parameters. The method includes performing N rounds of operations, wherein $N \geq 2$. Each round of the N rounds of operations includes determining a sequence of unitary operators, wherein each unitary operator in the sequence is a unitary operator being a unitary time evolution of the problem Hamiltonian, wherein the plurality of adjustable parameters of the problem Hamiltonian are in the problem-encoding configuration, or a unitary operator being a product of two or more short-range unitary operators. Each round of the N rounds of operations includes evolving the quantum system by applying the sequence of unitary operators to the quantum system. Each round of the N rounds of operations includes performing a measurement of one or more qubits of the quantum system. The method includes outputting a result of the quantum computation.

Embodiments described herein thus allow determining a solution to a computational problem, e.g. an NP-hard problem, using the quantum system. Compared to determining a solution to a computational problem using solely a classical computing system, i.e., without a quantum system, embodiments described herein may provide a decrease in computational time required for solving the computational problem. In other words, compared to classical computing systems, embodiments described herein may allow solving computational problems faster, or may even enable finding such a solution at all since the computation of the solution may take too long on a classical computing system to compute.

A further advantage relates to the aspect according to which the problem Hamiltonian $H_P$ is a single-body Hamiltonian. Since the problem Hamiltonian $H_P$ is a single-body Hamiltonian, a time evolution $\exp(itH_P)$ of the problem Hamiltonian is an operator having the form of a product $U_1 U_2 \cdots$, wherein each $U_i$ is an operator acting on the i-th qubit only, i.e. not acting on any qubit except the i-th qubit. In other words, the time evolution $\exp(itH_P)$ is a product of single-body operators. While other types of problem Hamiltonians, in particular problem Hamiltonians involving interactions between large groups of qubits or interactions between qubits being distant from each other (long-range interactions), may be infeasible or at least require a very complicated set-up of the quantum system and of the components driving the quantum computation, the time evolution of a single-body problem Hamiltonian, as described herein, can be realized using a much simpler set-up, i.e., a much simpler quantum processing device.

As yet a further advantage, the problem Hamiltonian of the embodiments described herein with its adjustable parameters provides a fully programmable system with which a wide range of computational problems can be encoded. The devices and methods according to embodiments described herein therefore allow for computing a solution to a wide range of computational problems, such as NP-hard problems. Compared to systems where only a limited number of problems can be encoded since certain interactions required by the problem Hamiltonian are hard-wired into the system, an increased flexibility and a much more powerful device and method is thereby provided.

A yet further advantage relates to the aspect according to which a sequence of unitary operators, as described herein, involves a product of short-range operators. Having short-range operators provides the advantage that no interactions between distant qubits need to be engineered. This is again in contrast to quantum evolutions requiring long-range interactions that may be infeasible to realize on the quantum system or may at least require a very complicated set-up of the quantum processing device.

Embodiments described herein provide for a scalable architecture for computing solutions to computational problems. For a given quantum system, solutions to a wide variety of computational problems of a certain maximal size can be computed, wherein the maximal size is determined by the number of qubits of the quantum system. To compute solutions of computational problems beyond this maximal size, a larger quantum system, i.e. a quantum system containing a larger number of qubits, can be provided, with a corresponding problem Hamiltonian according to embodiments described herein, to treat computational problems of a larger size. By choosing a quantum system having a suitably large number of qubits, solutions can thus be computed for computational problems of any desired size. Irrespective of the number of qubits of the quantum system, the problem Hamiltonian is a single-body Hamiltonian and the sequences of unitary operators by which the quantum system is evolved involve time evolutions of the problem Hamiltonian and/or products of short-range unitary operators, as described herein. Accordingly, a scalable architecture for computing solutions to computational problems is provided.

According to embodiments described herein, a quantum system may include a plurality of qubits. The plurality of qubits may comprise at least 3 qubits, in particular at least 8 qubits. Additionally or alternatively, the plurality of qubits may include K qubits, wherein K is 100 or more, e.g. between 100 and 10.000, preferably even more than 10.000. It shall be understood that the plurality of qubits shown in the figures described herein are shown for illustrational and explanatory purposes, and the actual number of qubits may depart therefrom.

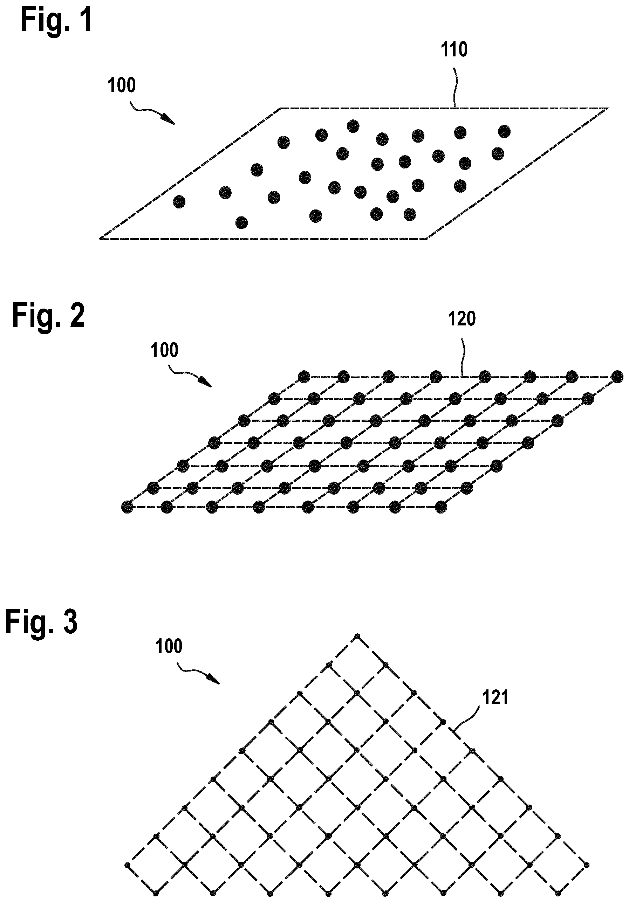

The plurality of qubits of the quantum system may be arranged according to a 2-dimensional surface, which may be planar or may include curvature. Figs. 1-3 show different spatial arrangements of a plurality of qubits 100 according to embodiments described herein. These spatial arrangements may be the layouts of quantum computing devices, e.g., quantum chips on which the qubits and/or other individual quantum systems (q-level systems such as qutrits) may be embodied. As shown in Fig. 1, the plurality of qubits 100 may be arranged according to a 2-dimensional planar surface 110, as indicated in Fig. 1 by the dashed lines. It shall be understood that the 2-dimensional surface 110 shown in Fig. 1 is drawn for the purpose of visually representing a 2-dimensional spatial arrangement of the plurality of qubits, but the 2-dimensional surface 110 need not be a physical, tangible surface on which the plurality of qubits 100 are arranged. Similar considerations apply to embodiments according to which the plurality of qubits is arranged according to a 2-dimensional lattice, as described below.

According to further embodiments, and as shown in Fig. 2, the plurality of qubits 100 may be arranged according to a 2-dimensional lattice 120 or at least a portion thereof, as indicated by the dashed lines. A lattice, such as e.g. a 2-dimensional lattice, may include a plurality of nodes spatially arranged according to a regular grid. In Fig. 2, the plurality of qubits 100, represented by the plurality of black dots, correspond to the nodes of the 2-dimensional lattice 120. As shown, each qubit of the plurality of qubits 100 may be arranged at a node of the 2-dimensional lattice 120. In the exemplary embodiment shown in Fig. 2, the 2-dimensional lattice 120 is a 2-dimensional square lattice. According to alternative embodiments, the 2-dimensional lattice 120 may, e.g., be a hexagonal lattice or triangular lattice, or any other type of 2-dimensional lattice.

A 2-dimensional lattice is a planar structure, which has the advantage of providing a simpler spatial arrangement of the qubits as compared to, e.g., a 3-dimensional lattice or some irregular spatial arrangement.

According to embodiments, the plurality of qubits may be arranged according to a portion of a 2-dimensional lattice. Fig. 3 illustrates an exemplary embodiment according to which the plurality of qubits 100 is arranged according to a triangular-shaped portion 121 of a 2-dimensional lattice. A triangular shaped portion corresponds to the layout of a quantum computing device according to some embodiments which are configured for carrying out the methods described herein. Portions of lattices having a different shape may be considered as well.

According to embodiments, the plurality of qubits may be arranged according to a 2-dimensional lattice.

According to some embodiments, the computational problem may be a decision problem. A decision problem may refer to a computational problem being formulated as a yes/no question. The solution to a decision problem may be either "yes" or "no". Alternatively, the solution to a decision problem may be a single classical bit, i.e. either 0 or 1. According to other embodiments, the computational problem may be formulated in a manner different from a decision problem.

The computational problem may be any one of a variety of computational problems considered in, e.g., the fields of computer science, physics, chemistry or engineering. For the purpose of explanation, but without intending to limit the scope, three examples of computational problems are discussed in the following. The three examples discussed below are examples of decision problems.

A first example of a computational problem according to embodiments described herein is the "traveling salesmen problem". The traveling salesman problem involves a first list of cities and a second list of distances between each pair of cities in the first list. The traveling salesman problem asks the following question: "Given the first list, the second list and a constant K, does there exist a tour of length at most K, wherein the tour (i) visits each city in the first list exactly once and (ii) returns to the city in which the tour starts?"

A second example of a computational problem according to embodiments described herein is the "3-colorability problem" relating to coloring of mathematical graphs. A mathematical graph may include a set of vertices and a set of edges representing connections between pairs of vertices. A 3-coloring of a mathematical graph is an assignment of each vertex of the mathematical graph to one of three possible colors (say, "red", "green" or "blue") wherein any pair of vertices connected by an edge are assigned to different colors. For some mathematical graphs, a 3-coloring may not exist. The 3-colorability problem asks the question: "Given a mathematical graph, does there exist a 3-coloring?"

A third example of a computational problem according to embodiments described herein relates to the Ising spin model. The Ising spin model is a physics model representing interactions between a plurality of spins $s_1, s_2, ..., s_n$, wherein each spin $s_i$ is a variable which can have either the value 1 or the value -1, with $i$ ranging from 1 to n. For the plurality of spins, an Ising energy function $H(s_1, s_2, ..., s_n)$ may be considered, wherein the Ising energy function has the form

$$H(s_1, s_2, ..., s_n) = \sum_{ij} c_{ij} s_i s_j + \sum_i c_i s_i$$

wherein each $c_{ij}$ is a coupling coefficient and each $c_i$ is a field coefficient. The Ising energy function involves pair-wise interactions, wherein a pair-wise interaction between spins $s_i$ and $s_j$ is represented by the term $c_{ij} s_i s_j$ in the Ising energy function. The absolute value of the coupling coefficient $c_{ij}$ reflects the strength of the pairwise interaction between the spins $s_i$ and $s_j$. The sign of the coupling coefficient $c_{ij}$ reflects the nature of the pairwise interaction, e.g. ferromagnetic or antiferromagnetic interactions. The Ising spin model may be a long-range Ising spin model. A long-range Ising spin model may include interactions between pairs of spins which are distant from each other according to a distance measure. A long-range Ising spin model may include interactions between pairs of spins which are distant from each other by a distance being at least the logarithm of the maximal distance between two spins. Some long-range Ising spin models, e.g. all-to-all Ising spin models, may involve interactions between all pairs of spins. For example, an Ising spin model where each of the coupling coefficients cij is non-zero may be considered to be a long-range Ising spin model.

The Ising energy function further includes terms $c_i s_i$ representing an interaction between a spin $s_i$ and an external field influencing the spin $s_i$ but not influencing the other spins. The strength and direction of the field influencing the spin si are represented by the absolute value and the sign of the field coefficient $c_i$, respectively. A computational problem associated with the Ising spin model, referred to herein as the Ising spin model problem, can be formulated as follows: "Given a set of coupling coefficients $c_{ij}$, a set of field coefficients $c_i$ and a constant K, does there exist a configuration ($s_1$, $s_2, ..., s_N$) of the spins such that $H(s_1, s_2, ..., s_n)$ is smaller than K?".

According to embodiments described herein, the computational problem may include a plurality of input variables. The plurality of input variables may represent information regarding the computational problem to be solved. For example, referring to the three examples of computational problems described above, the plurality of input variables may include: the first list of cities and the second list of distances (for the traveling salesman problem); the sets of vertices and edges of a graph (for the 3-colorability problem); the sets of coupling coefficients $c_{ij}$ and field coefficients $c_i$ (for the Ising spin model problem).

The size of a computational problem, as described herein, may refer to a measure for the number of classical information units required to specify the computational problem. The size of a computational problem may depend on the number of input variables of the computational problem. The size of a computational problem may increase as the number of input variables increases. The size of the computational problem may be equal to the number of input variables. For example, for the traveling salesman problem, as described herein, the size may refer to the sum of the lengths of the first list and the second list. As a further example, for the Ising spin model problem, the size may refer to the number n of spins $s_i$.

The problem Hamiltonian is a single-body Hamiltonian including a plurality of adjustable parameters. A single-body Hamiltonian of the quantum system may refer to a Hamiltonian wherein no interactions occur between groups of two or more qubits. A single-body Hamiltonian may be the sum of a plurality of summand Hamiltonians. Each summand Hamiltonian may act on a single qubit of the plurality of qubits. A single-body Hamiltonian may have the form $H = \sum_i H_i$ wherein each $H_i$ is a summand Hamiltonian acting solely on the i-th qubit. A single-body Hamiltonian may represent interactions between the plurality of qubits and an external entity, e.g. a magnetic field or an electric field, wherein each qubit interacts individually with the external entity.

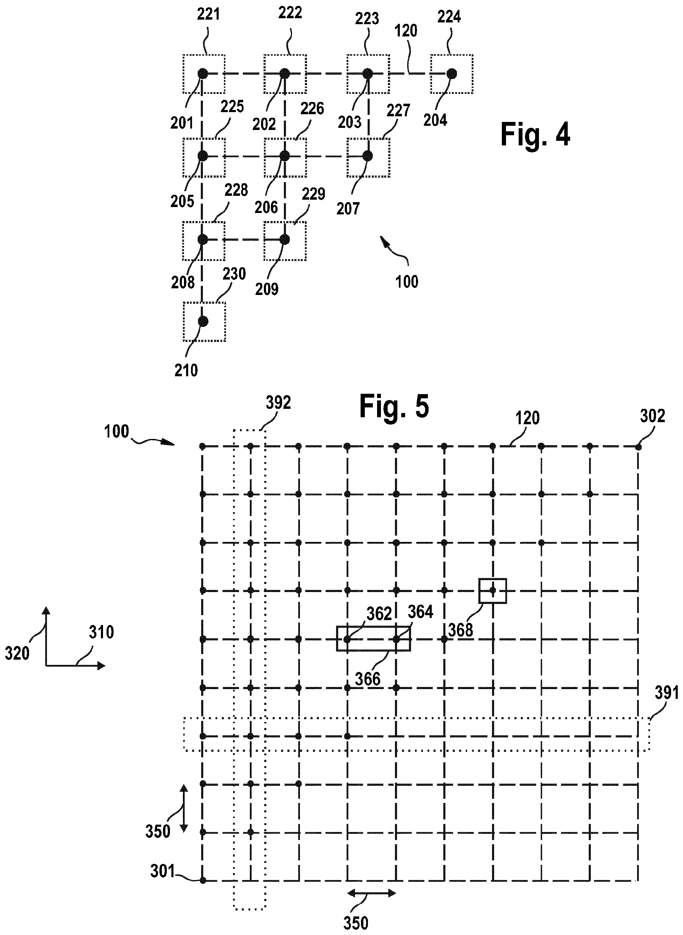

Fig. 4 shows a schematic illustration of a single-body Hamiltonian according to embodiments described herein. For the sake of concreteness, but without intending to limit the scope, the plurality of qubits shown in Fig. 4 includes 10 qubits, namely qubits 201 through 210, arranged in a portion of a 2-dimensional square lattice that forms a triangle. The single-body Hamiltonian described with reference to Fig. 4 is the sum of 10 summand Hamiltonians 221 through 230. In Fig. 4, each of the summand Hamiltonians 221 through 230 is schematically drawn as a square surrounding a single qubit, indicating that each summand Hamiltonian acts on a single qubit.

The problem Hamiltonian, being a single-body Hamiltonian, may be the sum of summand Hamiltonians as described above. The plurality of adjustable parameters of the problem Hamiltonian may include a plurality of adjustable parameters of the summand Hamiltonians. One or more summand Hamiltonians of the single-body Hamiltonian, in particular each of the summand Hamiltonians, may include one or more adjustable parameters.

An adjustable parameter of the problem Hamiltonian, as described herein, may refer to a parameter representing a strength and/or a direction of an interaction between a qubit of the plurality of qubits and an external entity. The external entity may be a field. The external entity may, e.g., include at least one of the following: one or more magnetic fields; one or more electric fields; one or more laser fields; one or more microwaves; and one or more phase shifts from mechanical deformations. Adjusting an adjustable parameter of the problem Hamiltonian may be realized by adjusting the external entity and/or by adjusting the strength and/or type of interaction between the qubit and the external entity. Accordingly, the adjustable parameter may represent an adjustable interaction, e.g. an interaction which is not hard-wired in the quantum system.

According to embodiments, the problem Hamiltonian includes a plurality of adjustable parameters. The plurality of adjustable parameters of the problem Hamiltonian may include a plurality of field strengths and/or a plurality of field directions of single-body fields acting on the plurality of qubits. The single-body fields acting on the plurality of qubits may include one or more magnetic fields and/or one or more electric fields, e.g. in embodiments relating to superconducting qubits.

A single-body field may refer to a field influencing a single qubit in the plurality of qubits. The plurality of single-body fields may include different single-body fields influencing the corresponding qubits according to possibly different field strengths and/or possibly different field directions. For example, a first single-body field and a second single-body field may influence a first qubit and a second qubit, respectively, in the plurality of qubits. Therein, the first single body field and the second single-body field, both being e.g. magnetic fields, may have different field strengths and/or field directions.

The problem Hamiltonian may have the form $\Sigma_k J_k \sigma_z^{(k)}$, wherein $\sigma_z^{(k)}$ is a Pauli operator of a k-th qubit of the plurality of qubits, wherein each $J_k$ is a coefficient, and wherein the coefficients $J_k$ form the plurality of adjustable parameters of the problem Hamiltonian. According to some embodiments, the Pauli operator $\sigma_z^{(k)}$ may be a Pauli operator associated with a first spatial direction.

For a quantum system including a plurality of superconducting qubits, a single-body Hamiltonian, such as e.g. the problem Hamiltonian, can be realized by a plurality of magnetic fluxes interacting with the plurality of superconducting qubits. A magnetic flux or magnetic flux bias may extend through the primary superconducting loop and through the secondary superconducting loop of a superconducting qubit. The plurality of adjustable parameters of the problem Hamiltonian can be adjusted by adjusting the plurality of magnetic fluxes or magnetic flux biases.

Alternatively, for a quantum system including a plurality of superconducting qubits, a single-body Hamiltonian can be realized by a plurality of charges interacting with the plurality of superconducting qubits. The plurality of adjustable parameters of the problem Hamiltonian can be adjusted by adjusting a plurality of charge bias fields.

For a quantum system realized with trapped ions, individual ions can be addressed by spatial separation or separation in energy. The case of spatial separation involves using a laser beam that has passed through and/or has been reflected from an acousto-optical deflector, an acousto-optical modulator, micromirror devices, or the like. The case of separation in energy involves using a magnetic field gradient that changes internal transition frequencies, allowing selection through energy differences, i.e., detunings of the applied fields. A single-body Hamiltonian can be realized by laser fields or microwaves resonant or off-resonant with the internal transition or by spatial magnetic field differences.

For a quantum system realized with quantum dots, a single-body Hamiltonian can be realized with electric fields.

For a quantum system realized with NV centers, using magnetic resonance through the application of microwave pulses, qubit states can be coherently manipulated on nano-second timescales. Selective manipulation of the qubit states can also be achieved conditional on the state of the close-by nuclear spins.

A computational problem, as described herein, may be mapped onto the problem-encoding configuration of the plurality of adjustable parameters of the problem Hamiltonian. The problem-encoding configuration may depend on and/or contain information about the computational problem. The act of determining the problem-encoding configuration may include determining and/or computing a value for each of the plurality of adjustable parameters. Each value may be determined and/or computed based on the computational problem. Examples of specific encodings for encoding a computational problem into a problem-encoding configuration of the adjustable parameters of the problem Hamiltonian are discussed below.

Different computational problems may be encoded into the problem Hamiltonian by determining corresponding different problem-encoding configurations. For example, a first computational problem and a second computational problem may be encoded into the problem Hamiltonian, leading to a first problem-encoding configuration and a second problem-encoding configuration for the plurality of adjustable parameters. If the second computational problem is different from the first computational problem, the second problem-encoding configuration of the adjustable parameters may be different from the first problem-encoding configuration.

The method according to embodiments described herein may include providing the computational problem, or at least information regarding the computational problem, to a classical computing system. For example, a plurality of input variables of the computational problem, as described herein, may be provided to the classical computing system. According to embodiments, the computational problem may be encoded in the problem-encoding configuration of the plurality of adjustable parameters by the classical computing system.

The terminology of a "short-range unitary operator", as used herein, refers to a unitary operator acting only on a subgroup of qubits of the plurality of qubits, wherein any two qubits within the subgroup of qubits are distanced from each other by a distance of at most an interaction cut-off distance of the quantum system. The short-range unitary operator does not act on any qubit outside of the subgroup of qubits. The subgroup of qubits may include one or more qubits. Mathematically, a short-range unitary operator has the form $U = U' \otimes I$, wherein $\otimes$ is the tensor product, $U'$ is a unitary operator acting on the subgroup of qubits, and I is the identity operator acting on all qubits outside of the subgroup of qubits.

Irrespective of the number of qubits in the quantum system, a unitary operator acting only on two qubits in the quantum system, wherein the two qubits are adjacent qubits ("nearest-neighbor" qubits) of the quantum system, shall be regarded as a short-range unitary operator. For a plurality of qubits arranged on a 2-dimensional lattice, the distance between two adjacent qubits may be equal to an elementary distance (lattice constant) of the 2-dimensional lattice.

Irrespective of the number of qubits in the quantum system, a unitary operator acting on a single qubit of the quantum system, e.g. a unitary operator acting on the i-th qubit and not acting on any other qubit of the quantum system, shall be regarded as a short-range unitary operator.

An interaction cut-off distance, as described herein, may be a constant distance. The interaction cut-off distance may be much smaller than a maximal qubit distance between the qubits in the plurality of qubits. For example, the interaction cut-off distance may be 30% or less of the maximal qubit distance, in particular 20% or less, more particularly 10% or less. For a plurality of qubits arranged according to a lattice, a short-range unitary operator may be an r-range unitary operator. An r-range unitary operator may be a unitary operator acting only on a subgroup of qubits of the plurality of qubits, wherein any pair of qubits within the subgroup of qubits are distanced from each other by a distance of at most r times an elementary distance (lattice constant) of the lattice. For example, r may be from 1 to 5, e.g. $r = \sqrt{2}$, 2, 3, 4 or 5.

The notion of an elementary distance of a lattice according to embodiments described herein is illustrated in Fig. 5. Fig. 5 shows a plurality of qubits 100 arranged according to a 2-dimensional square lattice 120. The qubits lie at positions of nodes of the 2-dimensional square lattice that form a triangle portion of the 2-dimensional square lattice. For the sake of concreteness, but without intending to limit the scope, the exemplary 2-dimensional square lattice 120 shown in Fig. 5 includes 55 qubits arranged in a triangle within a square 10 x 10 lattice comprising 10 rows and 10 columns. When traversing any row of qubits of the 2-dimensional lattice 120 along the x-direction 310, e.g. row 391 as indicated by the dotted lines, the consecutive qubits in the row are arranged at an elementary distance D from each other, which is also called a lattice constant in x-direction. The elementary distance D is indicated with reference numeral 350. Similarly, when traversing any column of qubits of the 2-dimensional lattice 120 along the y-direction 320, e.g. column 392, the consecutive qubits in the column are at an elementary distance, which is also called lattice constant in y-direction. In Fig. 5, the lattice is a square lattice and the elementary distances (lattice constants) in x-direction and y-direction are the same. However, the lattice constants in x-direction and in y-direction could also be different. As shown, the x-direction 310 is perpendicular to the y-direction 320.

The maximal qubit distance of the plurality of qubits 100 shown in Fig. 5 is the distance between qubits 301 and 302. The maximal qubit distance is equal to $(9\sqrt{2})D$. The interaction cut-off distance is equal to the elementary distance D. Accordingly, the interaction cut-off distance is much smaller than the maximal qubit distance, namely the interaction cut-off distance D is below 10% of the maximal qubit distance.

With reference to Fig. 5, an example of a short-range unitary operator is a unitary operator 366. The unitary operator 36 is a 2-body unitary operator. The unitary operator 36 acts only on two qubits 362 and 364 in the quantum system. The two qubits 362 and 364 are adjacent qubits on the lattice. The distance between qubits 362 and 364 is equal to the elementary distance D.

With reference to Fig. 5, a further example of a short-range unitary operator is an operator 368. The operator 368 acts on a single qubit of the quantum system, as shown. The operator 368 is a single-body unitary operator.

According to embodiments, the plurality of qubits are arranged according to a 2-dimensional lattice. Each short-range unitary operator of each of the N rounds of operations may be either a 2-body unitary operator acting on adjacent qubits of the 2-dimensional lattice or a single-body unitary operator.

A 2-body unitary operator, as described herein, refers to a unitary operator acting only on a subgroup including at most two qubits of the plurality of qubits. The 2-body unitary operator does not act on any qubit outside of the subgroup of qubits. Mathematically, a 2-body unitary operator has the form $U = U' \otimes I$, wherein $U'$ is a unitary operator acting on the subgroup of qubits, and I is the identity operator acting on all qubits outside of the subgroup of qubits.

Two qubits are adjacent qubits of the 2-dimensional lattice if the two qubits correspond to two nodes of the lattice which are connected by an edge of the lattice. For example, qubits 362 and 364 as shown in Fig. 5 are adjacent qubits of the lattice shown in Fig. 5.

A single-body unitary operator, as described herein, is an operator acting on a single qubit of the quantum system, e.g. the i-th qubit. Mathematically, a single-body unitary operator has the form $U = U' \otimes I$, wherein $U'$ is a unitary operator acting on a single qubit qubit, and I is the identity operator acting on all qubits except for the single qubit. A single-body unitary operator shall herein be considered as an example of a two-body operator.

According to embodiments, each short-range operator of each of the N rounds may be either a controlled-not operator or a single-body unitary operator. A controlled-not (CNOT) operator is a two-body operator. A CNOT operator acts as follows on a set of basis vectors for two qubits: |00> is mapped to |00>; |01> is mapped to |01>; |10> is mapped to 111>; and 111> is mapped to |10>. Therein, the first qubit is the control qubit of the CNOT operator and the second qubit is the target qubit of the CNOT operator.

Each short-range operator of each of the N rounds may be either a controlled-not operator or a single-body unitary operator, wherein each single-body unitary operator has the form $\exp(it\sigma_z)$ or $\exp(it\sigma_x)$. Therein, $\sigma_z$ and $\sigma_x$ represent Pauli operators.

For superconducting charge or flux qubits, CNOT operations can be realized with an additional capacitive element coupled to two qubits. The interaction strength is tuned by magnetic or electric flux applied to the additional element. Alternatively, the two qubits are coupled to two modes of a Josephson ring modulator. Single-body unitary operators $\exp(it\sigma_x)$ can be realized with controlled external magnetic or electric flux.

For trapped ion systems, CNOT operations between ions can be realized via a phonon bus and the interaction strength can be tuned by frequency modulations of the phonon modes. Single-body unitary operators $\exp(it\sigma_x)$ can be realized via controlled magnetic dipole transitions or controlled Raman transitions.

For Rydberg atoms, CNOT operations between Rydberg atoms are implemented by driving atomic transitions with a laser with detuning to highly excited states. Single-body unitary operators $\exp(it\sigma_x)$ can be realized with detuned laser driving of Rydberg transions.

For quantum dots, CNOT operations between quantum dots can be realized by electric or magnetic field gradients. Single-body unitary operators $\exp(it\sigma_x)$ can be realized with electric pulse sequences and magnetic fields.

A sequence of unitary operators, as described herein, may be understood as an ordered list $O_1, O_2, ...,$ wherein each $O_i$ is a unitary operator. Each unitary operator $O_i$ in the sequence of unitary operators may be a unitary time evolution of the problem Hamiltonian, wherein the plurality of adjustable parameters of the problem Hamiltonian are in the problem-encoding configuration, or a unitary operator being a product of two or more short-range unitary operators. The ordering of the unitary operators in the sequence corresponds to the order in which the unitary operators are to be applied to the quantum system. A sequence of unitary operators may have a sequence length, which is the number of operators $O_i$ in the ordered list O1, O2, ...

The act of determining a sequence of unitary operators, as described herein, may be understood as determining or selecting an ordered list of unitary operators. Determining a sequence of unitary operators may include determining a sequence length for the sequence and/or determining, for each i-th position in the sequence, a unitary operator for the i-th position. Determining a unitary operator for the i-th position may include deciding whether the unitary operator on the i-th position shall be a time evolution of the problem Hamiltonian or a product of two or more short-range unitary operators. Where it is determined that the unitary operator on the i-th position shall be a time evolution $\exp(itH_P)$ of the problem Hamiltonian, determining the unitary operator for the i-th position may include determining a time period t during which the time evolution should be ran. Where it is determined that the unitary operator on the i-th position shall be a product of one or more short-range operators, determining the unitary operator for the i-th position may include determining how many short-range operators shall be contained in the product, and/or which short-range operators shall be included in the product.

According to embodiments, each round of the N rounds of operations includes evolving the quantum system by applying the sequence of unitary operators of that round to the quantum system. Applying a sequence of unitary operators to the quantum system means that all unitary operators in the sequence are applied to the quantum system in the order prescribed by the sequence of unitary operators. Applying the sequence of unitary operators to the quantum system corresponds to evolving the quantum system by a total unitary operator being the product of all unitary operators in the sequence of unitary operators. The product is carried out in the order prescribed by the sequence.

According to embodiments, each i-th round of the N rounds of operations may include preparing an initial quantum state for the i-th round. The initial quantum state may be the same for all of the N rounds of operations. For example, the initial quantum state for each round may be the quantum state wherein each qubit of the plurality of qubits in the state |+> = |0> + |1>. Alternatively, different initial quantum states may be prepared for different rounds of operations.

For each of the N rounds of operations, the sequence of unitary operations of the i-th round may be applied to the initial quantum state of the i-th round.

According to embodiments, each round of the N rounds of operations includes performing a measurement of one or more qubits of the quantum system. For each of the N rounds of operations, the measurement of the i-th round may be performed after applying the sequence of unitary operators of the i-th round.

The N rounds of operations may include 2 or more, particularly 10 or more, more particularly 1000 or more rounds of operations.

For each of the N rounds of operations, the sequence of unitary operators of a round may include 2 or more, particularly 5 or more, more particularly 200 or more unitary operators.

The N rounds of operations include a first sequence of unitary operators. The first sequence of unitary operators may include a first plurality of unitary operators, wherein each unitary operator of the first plurality of unitary operators is a time evolution of the problem Hamiltonian. The first plurality of unitary operators may include 2 or more, particularly 10 or more, more particularly 100 or more unitary operators.

The first sequence of unitary operators may include a first unitary operator $\exp(it_1 H_P)$ being a time evolution of the problem Hamiltonian $H_P$ for a first time period $t_1$. The first sequence of unitary operators may include a second unitary operator $\exp(it_2 H_P)$ being a time evolution of the problem Hamiltonian for a second time period $t_2$ different from the first time period $t_1$. The first sequence of unitary operators may include a third unitary operator $\exp(it_3 H_P)$ being a time evolution of the problem Hamiltonian for a third time period $t_3$ different from at least one of the first time period $t_1$ and the second time period $t_2$.

The first sequence of unitary operators may include a second plurality of unitary operators, wherein each unitary operator of the second plurality of unitary operators is a product of two or more short-range unitary operators. The second plurality of unitary operators may include 2 or more, particularly 5 or more, more particularly 200 or more unitary operators.

The first sequence of unitary operators includes a unitary operator being a first product of two or more short-range unitary operators. The sequence of unitary operators may include a unitary operator being a second product of two or more short-range unitary operators. The first product may be different from the second product. The sequence of unitary operators may include a unitary operator being a third product of two or more short-range unitary operators. The third product may be different from at least one of the first product and the second product.

The sequence of unitary operators of each of the N rounds of operations may be a sequence of alternations of the form $A_1, B_1, A_2, B_2, \cdots$. Each $A_i$ may be a unitary time evolution of the problem Hamiltonian, wherein the plurality of adjustable parameters of the problem Hamiltonian are in the problem-encoding configuration. Each $B_i$ may be a product of two or more short-range unitary operators.

In some implementations, the method includes a feed-forward of information, wherein the sequence of unitary operators to be applied in a round of operations may depend on measurement outcomes of measurements performed in one or more previous rounds of operations. The N rounds of operations may include one or more adaptive rounds of operations. For each adaptive round of operations, the unitary operators of the sequence of unitary operators of the adaptive round are determined based on at least one measurement outcome of a measurement performed in a previous round of the N rounds of operations.

The one or more adaptive rounds of operations may include a first adaptive round of operations. A method according to embodiments described herein may include processing, e.g. by a classical computing system as described herein, one or more measurement outcomes of a round of operations preceding the first adaptive round of operations. The method may include determining the sequence of unitary operators of the first adaptive round of operations in response to the processing of the one or more measurement outcomes of the round of operations preceding the first adaptive round of operations.

In some implementations, the sequence of unitary operators to be applied in an adaptive round may depend on measurement outcomes of two previous rounds of operations. The method may include processing measurement outcomes of two rounds of operations preceding the first adaptive round of operations. The method may include determining the sequence of unitary operators of the first adaptive round of operations in response to the processing of the measurement outcomes of the two rounds of operations preceding the first adaptive round of operations.

The one or more adaptive rounds of operations, as described herein, may be a plurality of adaptive rounds. The plurality of adaptive rounds may include 2 or more, in some cases up to 10000 or more adaptive rounds.

According to embodiments, each round of the N rounds of operations includes performing a measurement of one or more qubits of the quantum system. The one or more qubits may include a portion of the plurality of qubits. The one or more qubits may include 70% or less of the plurality of qubits, in particular 60% or less, more particularly 50% or less.

Performing a measurement of one or more qubits, as described herein, may include measuring each qubit of the one or more qubits individually. Performing a measurement of the one or more qubits may include measuring a Pauli operator, e.g. the Pauli operator $\sigma_z$, for each of the one or more qubits. Performing a measurement of the one or more qubits may include performing a two-outcome measurement for each of the one or more qubits. A two-outcome measurement may provide one of two possible outcomes, e.g. 0 or 1.

A same measurement may be performed for at least two rounds of the N rounds of operations. In other words, one or more quantum observables can be measured for a first round of the N rounds of operations, and the one or more quantum observables can also be measured for a second round of the N rounds of operations. Performing a same measurement for several rounds of operations can allow comparing measurement outcomes of the same measurement for different rounds of operations. For example, as described herein, the energy of quantum states generated by different sequences of unitary operations can be compared with each other, thereby providing a method for efficiently searching for a ground state.

For a quantum system including a plurality of K superconducting qubits, the qubit states |0> and |1> for the plurality of qubits can be measured with high fidelity using a measurement device including a plurality of superconducting quantum interference devices, in particular K hysteretic DC superconducting quantum interference devices and K RF superconducting quantum interference device latches controlled by bias lines, wherein the number of bias lines scales according to $\sqrt{K}$.

For a quantum system realized with trapped ions, a measurement of the quantum system can be performed by fluorescence spectroscopy. Therein, ions are driven on a transition with short lifetime if they are in one of the two spin states. As a result, the ions in the driven state emit many photons, while the other ions remain dark. The emitted photons can be registered by commercial CCD cameras. Measurement in any of the directions on the Bloch sphere is achieved by appropriate single-qubit pulses prior to the fluorescence spectroscopy.

For a quantum system realized with cold atoms, the qubits can be measured by performing a selective sweep of ground state atoms and fluorescence imaging with single site resolutions.

For a quantum system realized with quantum dots, the qubits can be read out from a pulse sequence by rapid adiabatic passage.

The N rounds of operations may include a first round of operations. Applying the sequence of unitary operators of the first round of operations may result in a first quantum state of the quantum system. For example, $|\psi_{in}>$ may denote the initial quantum state of the first round operations and $U_1$ may denote the unitary operator being the product of all unitary operators in the sequence of unitary operators of the first round. Then $|\psi_1> = U_1 |\psi_{in}>$ may be the first quantum state of the quantum system.

A method according to embodiments described herein may include measuring an energy, particularly an average energy or expected energy, of the first quantum state. Measuring an energy of the first quantum state may include measuring a Hamiltonian of the quantum system. Measuring an energy of the first quantum state may include measuring an expectation value of a Hamiltonian of the quantum system. The expectation value of a Hamiltonian H may be represented as $<\psi_1| H |\psi_1>$. Measuring an energy of the first quantum state may include measuring a total Hamiltonian, as described herein, of the quantum system.

The measurement of an energy can be performed by measuring the qubits in the system individually, e.g. measurement of the Pauli operator $\sigma_z$. Based on the measurement outcomes resulting from such measurements, the energy can be computed, e.g. by a classical computing system as described herein.

The N rounds of operations may include a second round of operations performed after the first round of operations. Applying the sequence of unitary operators of the second round of operations may results in a second quantum state of the quantum system. For example, $|\psi_{in}>$ may also be the initial quantum state of the second round operations, i.e. the same initial state as the first round of operations, and $U_2$ may denote the unitary operator being the product of all unitary operators in the sequence of unitary operators of the second round. Then $|\psi_2> = U_2 |\psi_{in}>$ may be the second quantum state of the quantum system.

A method according to embodiments described herein may include measuring an energy, particularly an average energy or expected energy, of the second quantum state. Measuring an energy of the second quantum state may include measuring a Hamiltonian of the quantum system. Measuring an energy of the second quantum state may include measuring an expectation value of a Hamiltonian of the quantum system. The measured Hamiltonian for the first quantum state may be the same as the measured Hamiltonian for the second quantum state. Measuring an energy of the second quantum state may include measuring the total Hamiltonian of the quantum system.

The method may include comparing the energy of the first quantum state with the energy of the second quantum state. The method may include determining the sequence of unitary operators to be applied in a third round of the N rounds of operations, wherein the third round is to be performed after the second round. The sequence of unitary operators to be applied in the third round may be determined based at least on the comparison of the energy of the first quantum state with the energy of the second quantum state.

For example, if the comparison of the energy of the first quantum state with the energy of the second quantum state reveals that the energy of the first quantum state is smaller than the energy of the second quantum state, the operator may conclude that the first quantum state is closer to the ground state of the measured Hamiltonian than the second quantum state. In light thereof, the operator may reject the sequence of unitary operators of the second round and return to the sequence of unitary operations of the first round. Starting from the sequence of unitary operations of the first round, the operator may make a small perturbation to said sequence, e.g. by replacing one or just a few operators from said sequence by different operators. The resulting sequence may be the sequence of unitary operators to be applied in the third round of operations.

Alternatively, if the comparison of the energy of the first quantum state with the energy of the second quantum state reveals that the energy of the first quantum state is larger than (or equal to) the energy of the second quantum state, the operator may conclude that the second quantum state is closer to the ground state of the measured Hamiltonian than the first quantum state. In light thereof, the operator may accept the sequence of unitary operators of the second round. Starting from the sequence of unitary operations of the second round, the operator may make a small adjustment or perturbation to said sequence. The resulting adjusted sequence may be the sequence of unitary operators to be applied in the third round of operations.

The operator can proceed in a similar manner throughout all rounds of operations: (i) measure the energy of the quantum state obtained after applying the sequence of unitary operations of the current round of operations; (ii) compare the measured energy of the current round with a measured energy of a previous round; (iii) if the measured energy of the current round is larger than the measured energy of the previous round, reject the quantum state of the current round and accept the sequence of unitary operations of the previous round; alternatively, if the measured energy of the current round is smaller than the measured energy of the previous round, accept the sequence of unitary operations of the current round; (iv) starting from the accepted sequence of unitary operations, perturb said accepted sequence to obtain a sequence of operations for a next round of operations.

As the number N of rounds is increased, an increasingly larger set of quantum states is prepared, wherein the energy of subsequent quantum states gradually decreases (or at least does not increase). Accordingly, the energy gradually approaches the ground state energy of the measured Hamiltonian. In light thereof, embodiments described herein provide a gradually improving approximation to the ground state of the measured Hamiltonian.

By measuring a suitable Hamiltonian in the respective rounds of operations, a solution to the computational problem can be determined. According to embodiments, a plurality of rounds of the N rounds of operations may each include measuring a total Hamiltonian of the quantum system. The total Hamiltonian may have a ground state containing information regarding a solution to the computation problem.

The total Hamiltonian may be a sum of the problem Hamiltonian $H_P$ and a short-range Hamiltonian $H_{SR}$. The total Hamiltonian can be represented as $H^{total} = H_P + H_{SR}$. In the total Hamiltonian, the plurality of adjustable parameters of the problem Hamiltonian may be in the problem-encoding configuration. In some implementations, the short-range Hamiltonian can be a plaquette Hamiltonian representing interactions between groups of qubits corresponding to plaquettes. The plaquettes may, e.g. be elementary squares of a 2-dimensional square lattice according to which the qubits are arranged. The short-range Hamiltonian may be a d-body Hamiltonian, e.g. a 4-body plaquette Hamiltonian, wherein d is independent of the computational problem. The short-range Hamiltonian may be independent of the computational problem.

The terminology of a short-range Hamiltonian, as used herein, may refer to a Hamiltonian representing interactions of the plurality of qubits, wherein no interactions occur between qubits which are distanced from each other by a distance greater than an interaction cut-off distance, as described herein.. For a plurality of qubits arranged according to a lattice, a short-range Hamiltonian may be an r-range Hamiltonian, wherein no interactions occur between qubits which are distanced from each other by a distance greater than r times an elementary distance (lattice constant), as described herein, of the lattice. Therein, r may be from 1 to 5, e.g. $r = \sqrt{2}, 2, 3, 4$ or 5.

Irrespective of the number of qubits of the quantum system, a plaquette Hamiltonian and a pairwise nearest-neighbor Hamiltonian of the quantum system, as described herein, shall be regarded as short-range Hamiltonians.

An example of a short-range Hamiltonian is a single-body Hamiltonian, as described herein. For a single-body Hamiltonian, the interaction cut-off distance may be considered to be zero, since there are no interactions between groups of two or more qubits but only interactions between individual qubits and an external entity, e.g. a magnetic field or an electric field.

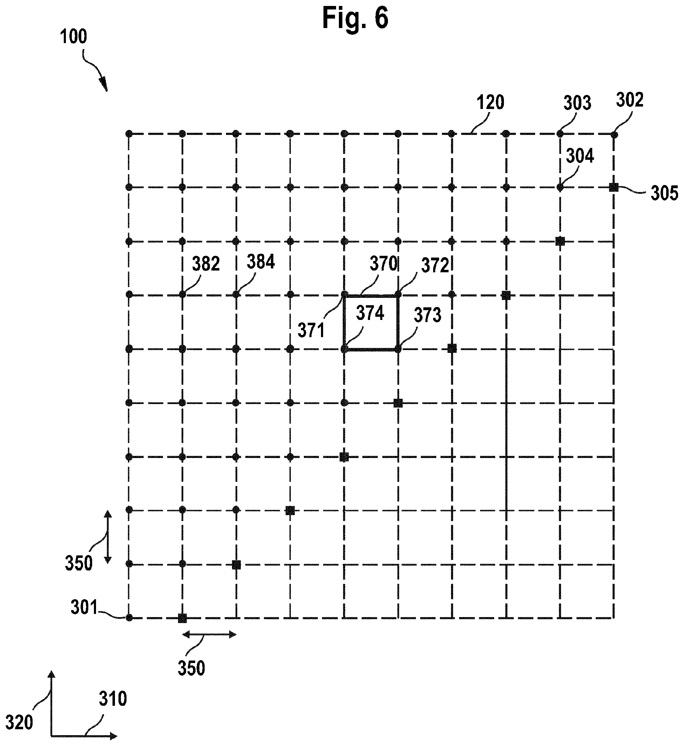

Fig. 6 shows further examples of short-range Hamiltonians for embodiments in which the plurality of qubits 100 are arranged according to a 2-dimensional square lattice 120, and lie at positions of nodes of the 2-dimensional square lattice that form a triangle portion of the 2-dimensional square lattice. An example of a short-range Hamiltonian described with reference to Fig. 6 is a pairwise nearest-neighbor Hamiltonian. A pairwise nearest-neighbor Hamiltonian may involve only interactions between pairs of adjacent qubits ("nearest-neighbor" qubits) on the 2-dimensional lattice 120, wherein a pair of adjacent qubits may refer to a pair of qubits distanced from each other by the elementary distance D. Qubits 382 and 384 shown in Fig. 6 form an example of a pair of adjacent qubits. A pairwise nearest-neighbor Hamiltonian may be the sum of a plurality of summand Hamiltonians, wherein each summand Hamiltonian represents an interaction between a pair of adjacent qubits. For a pairwise nearest-neighbor Hamiltonian described in reference to Fig. 6, the interaction cut-off distance is equal to the elementary distance D. Accordingly, the interaction cut-off distance is much smaller compared to the maximal qubit distance, namely the interaction cut-off distance D is below 10% of the maximal qubit distance.

A further example of a short-range Hamiltonian described with reference to Fig. 6 is a plaquette Hamiltonian. A plaquette of the 2-dimensional square lattice 120 is an elementary square of the 2-dimensional square lattice 120, as illustrated in Fig. 6 with reference numeral 370. The plaquette 370 comprises qubits 371, 372, 373 and 374, wherein qubit 371 is arranged at the elementary distance D from qubit 372 and from qubit 374, and wherein qubit 373 is also arranged at the elementary distance D from qubits 372 and 374. Additionally, auxiliary qubits shown with black rectangles are added in a further line so as to complete the plaquettes of the qubits. For instance, auxiliary qubit 305 completes the plaquette of qubits 302, 303 and 304. The auxiliary qubits can be prepared in a specific quantum state, e.g., |1>. For this lattice geometry, a plaquette Hamiltonian may involve only interactions between groups of four qubits, or groups of three qubits and one ancilla qubit, corresponding to plaquettes of the 2-dimensional square lattice 120. A plaquette Hamiltonian may be the sum of a plurality of summand Hamiltonians. Each summand Hamiltonian may represent an interaction corresponding to a plaquette of qubits on the lattice, or an interaction corresponding to a plaquette of qubits and an auxiliary qubit. Alternatively, no auxiliary qubits may be used, and the plaquette Hamiltonian then includes summand Hamiltonians describing interactions between only three qubits. For a plaquette Hamiltonian described with reference to Fig. 6, the interaction cut-off distance is $\sqrt{2}D$ since the maximal distance between two qubits in a plaquette is $\sqrt{2}D$. For example, the distance between qubits 371 and 373 is $\sqrt{2}D$. Accordingly, the interaction cut-off distance is much smaller compared to the maximal qubit distance, namely the interaction cut-off distance $\sqrt{2}D$ is below 12% of the maximal qubit distance.

As mentioned above, the computational problem is encoded in the problem Hamiltonian, in particular in the problem-encoding configuration of the adjustable parameters. The encoding may be such that the total Hamiltonian, being the sum of the problem Hamiltonian and a short-range Hamiltonian, has a ground state containing information about a solution to the computational problem. Accordingly, if the quantum system is in the ground state of the total Hamiltonian, or close to the ground state, the information about the computational problem may be revealed by measuring the quantum system.

For example, by measuring the total Hamiltonian in a plurality of rounds of operations, and by comparing the energies of the total Hamiltonian measured in different rounds with each other, followed by accepting the sequence of unitary operations of the current round or a previous round, as described herein, embodiments described herein provide a method for generating a sequence of quantum states which form an increasingly better approximation of the ground state of the total Hamiltonian. Accordingly, by measuring the quantum system, a solution to the computational problem can be determined.

Although above an example is given of a method wherein the energy is measured in a plurality of adaptive rounds of operations, in alternative embodiments the energy may be measured without having adaptive rounds of operations. For example, the method may include non-adaptive rounds only, wherein in each round of operations the energy of a Hamiltonian is measured. After all N rounds have been performed, the different measured energies can be compared with each other. The lowest measured energy and the corresponding quantum state can be selected. Accordingly, an approximation of the ground state of the Hamiltonian can be computed without performing adaptive rounds. As compared to such non-adaptive method, a method involving one or more adaptive rounds has the advantage of being computationally more efficient, i.e., by the latter method a good approximation to the ground state can be found faster.

Although above an example is given of a method wherein the measured Hamiltonian is the total Hamiltonian as described herein, other Hamiltonians may also be measured. In particular, the total Hamiltonian may be modified or transformed so that the form of the modified Hamiltonian may differ from the total Hamiltonian, but the modified Hamiltonian still has the property that the ground state of the modified Hamiltonian contains information regarding the solution to the computational problem. For example, modifying the total Hamiltonian by a change of basis for each qubit, or for a plurality of small groups of qubits, may change the form of the Hamiltonian, but does not change the property that the ground state of the of the modified Hamiltonian contains information regarding the solution to the computational problem.

Although above an example is given of a method wherein one or more energies are measured, further or alternative measurements may also be performed. For example, instead of measuring an energy of a quantum state (such as the first or second quantum state as described herein), the quantum fidelity of the quantum state with respect to a target state may be measured. For example, the target state may be a ground state of a target Hamiltonian (such as the total Hamiltonians as described herein, or other Hamiltonians). The quantum fidelity of two quantum states $|\psi_1>$ and $|\psi_2>$ refers to the quantity $|<\psi_1|\psi_2>|$.

The method according to embodiments described herein includes outputting a result of the quantum computation. The method may include processing, e.g. by a classical computing system as described herein, one or more measurement outcomes of one or more measurements performed during the N rounds op operations. The method may include outputting the result of the quantum computation based on the processing of the one or more measurement outcomes.

The outputted result of the quantum computation may be a solution, particularly a trial solution, of the computational problem. A trial solution may or may not be a true solution to the computational problem. A trial solution may be an approximate solution of the computational problem. For example, the computational problem may involve computing a ground state energy of a spin model, e.g. the Ising spin model as described herein. Computing an approximate solution of the computational problem may include computing an energy which approximates the ground state energy of the Ising spin model problem. For embodiments according to which the computational problem belongs to the complexity class NP, computing a solution to the computational problem may include computing a set of witness variables, as described herein.

The method according to embodiments described herein may be a method of computing a solution to a computational problem.

According to embodiments, each product of two or more short-range unitary operators comprised in the N rounds of operations may be parallelizable to a constant depth.

The term "depth" as used in the present disclosure refers to the notion of circuit depth of a circuit of logic gates as known in the field of computer science. A circuit of logic gates acting on a set of n inputs can be said to be parallelizable to a depth D if the logic gates in the circuit can be grouped into D layers (slices) of logic gates, such that in each layer there are no two logic gates acting on the same input. In other words, within each layer, each input is acted upon by at most one logic gate. In the present context of quantum computation, the plurality of qubits of the quantum system may correspond to the n inputs, a unitary operator may correspond to a logic gate, and a product or sequence of unitary operators may correspond to a circuit of logic gates. Accordingly, a product of two or more short-range unitary operators, as described herein, is parallelizable to a depth D if the short-range unitary operators in the product can be grouped into D layers, wherein, within each layer, each qubit of the quantum system is acted upon by at most one unitary operator of the layer.

The depth is a measure of how much a circuit or product can be parallelized. Operations within each layer can be performed in the same time step ("in parallel"), since the gates/operators within one layer act on different inputs/qubits. Therefore, a circuit or product which is parallelizable to a depth D can be carried out in D time steps.

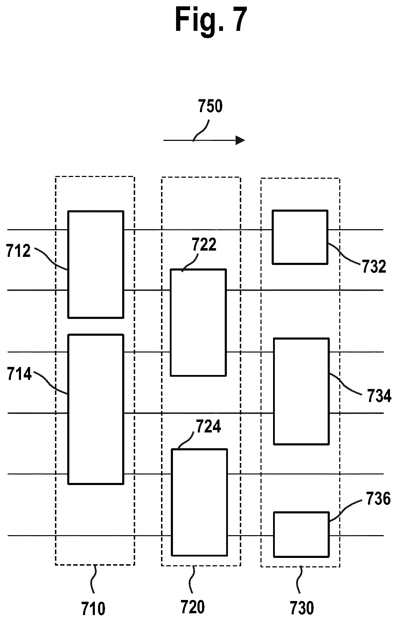

For the purpose of illustrating the notion "depth", Fig. 7 shows an example of a product of short-range operators. For the sake of concreteness, but without intending to limit the scope, Fig. 7 shows a quantum system consisting of 6 qubits and a product consisting of 7 short-range unitary operators. The 6 qubits are represented in Fig. 7 by 6 horizontal lines. The short-range unitary operators are represented by rectangular boxes. The short-range unitary operators in the product are grouped into three layers 710, 720 and 730. The arrow 750 represents the direction of time. That is, the operators in layer 710 are applied first, thereafter the operators in layer 720 are applied, and still thereafter the operators in layer 730 are applied to the quantum system. The layer 710 includes two unitary operators, namely a unitary operator 712 acting on 2 qubits (2-body operator) and a unitary operator 714 acting on 3 qubits (3-body operator). The layer 720 includes two unitary operators 722 and 724, each acting on two respective qubits. The layer 730 includes three unitary operators, namely a unitary operator 732 acting on a single qubit (single-qubit operator), a unitary operator 734 acting on 2 qubits and another unitary operator 736 acting on a single qubit. Within each layer of operations, no two unitary operators act on a same qubit. In other words, in each layer, each qubit is acted upon by at most one unitary operator. Accordingly, the product illustrated in Fig. 7 is parallelizable to depth 3.

A constant depth refers to a depth which is independent of the size of quantum system, more particularly independent of the number of qubits in the quantum system. A constant depth may be a depth which is much smaller than the number of qubits in the quantum system. For example, a constant depth may be a depth which is 30% or less, in particular 20% or less, more particularly 10% or less, of the number of qubits in the quantum system.

As the method described herein is used for solving computational problems of increasing sizes, quantum systems of increasing system sizes are needed. That is, the number of qubits in the quantum system grows as a function of the size of the computational problem. According to embodiments, irrespective of the size of the computational problem, each product of two or more short-range unitary operators comprised in the N rounds of operations may be parallelizable to a constant depth. That is, unlike the number of qubits in the quantum system, the depth does not grow as a function of the size of the computational problem but is bounded from above by a constant, e.g. 20.

According to embodiments, each product of two or more short-range unitary operators comprised in the N rounds of operations may be parallelizable to a depth D, wherein D is 100 or less, more particularly 6 or less.

According to embodiments, the computational problem may be an NP-hard problem, particularly an Ising spin model problem. The outputted result of the quantum computation may be a solution to the NP-hard problem.

The computational problem, as described herein, may relate to the complexity class NP considered in the field of computer science, wherein "NP" stands for "nondeterministic polynomial time". According to embodiments, which can be combined with other embodiments described herein, the computational problem belongs to the complexity class NP. The complexity class NP comprises decision problems. Informally speaking, for a computational problem belonging to the complexity class NP, there exists a set of witness variables on the basis of which it is possible to verify that the solution to the computational problem is "yes". Therein, for computational problems in NP, the process of verifying that the solution is "yes" can be carried out by a verification algorithm having a runtime which scales only polynomially with the size of the computational problem. In other words, the set of witness variables contains information about the solution, wherein the information may processed in polynomial runtime by the verification algorithm to verify that the solution is "yes. For a formal definition of the complexity class NP, reference is made to the relevant computer science literature.

For example, the traveling salesman problem, the 3-colorability problem and the Ising spin model problem, as described herein, are examples of decision problems in the complexity class NP. For example, consider the Ising spin model problem. If the solution to the Ising spin model problem for a given set of coupling coefficients and field coefficients and for a given constant K is "yes", then a configuration of spins $(s_1, s_2, ..., s_n)$ for which the associated Ising energy function

$H(s_1, s_2, ..., s_n)$ is smaller than K may be regarded as a set of witness variables. Given the witness variables $(s_1, s_2, ..., s_n)$, it may be verified in polynomial time that the energy $H(s_1, s_2, ..., s_n)$ is indeed smaller than K, by computing the number $H(s_1, s_2, ..., s_n)$ and comparing it with K. Accordingly, the Ising spin model problem is contained in the complexity class NP.

The task of determining whether a solution, which is "yes" or "no" for a decision problem, may not have a polynomial time algorithm for some computational problems in NP or may even have an exponential runtime, whereas the verification algorithm may have a polynomial runtime. It is considered that some computational problems in the complexity class NP are computationally intractable for classical computing systems. Therein, the terminology of a "computationally intractable" computational problem may refer to a computational problem for which there does not exist an algorithm, running on a classical computing system with polynomial runtime, to determine whether the solution to the computational problem is "yes" or "no". In particular, the traveling salesman problem, the 3-colorability problem and the Ising spin model problem, are considered intractable for classical computing systems, or at least no algorithm is known to solve any of these problems in polynomial runtime.

According to embodiments, which can be combined with other embodiments described herein, the computational problem for which a solution is computed using the quantum system, as described herein, is an NP-complete problem or an NP-hard problem. NP-complete problems belong to the class NP and are considered computationally intractable for classical computing systems. Although not every NP-hard problem belongs to NP, NP-hard problems are also considered to be computationally intractable for classical computing systems.

For embodiments according to which the computational problem belongs to the complexity class NP, e.g. NP-complete problems, the outputted result of the quantum computation may include a set of witness variables of the computational problem or at least a portion of this set.

According to some embodiments, which can be combined with other embodiments described herein, determining the problem-encoding configuration may include mapping the computational problem onto an auxiliary computational problem, wherein the auxiliary computational problem includes determining a ground state of a long-range spin model. The auxiliary computational problem depends on the computational problem. Mapping the computational problem onto the auxiliary computational problem may include mapping input parameters of the computational problem onto input parameters of the auxiliary computational problem. The mapping of the computational problem onto the auxiliary problem may be such that a solution for the computational problem may be determined from a solution to the auxiliary computational problem.

According to embodiments, the auxiliary computational problem may be the Ising spin model problem, as described herein. According to further embodiments, the computational problem may be a problem in the complexity class NP, e.g., the traveling salesman problem, as described herein. Since the Ising spin model problem is an NP-complete problem, every problem in the complexity class NP, such as e.g., the traveling salesman problem, may be mapped onto the Ising spin model problem. For example, for the traveling salesman problem including a first list and a second list, as described herein, the first list and the second list may be mapped onto a set of coupling coefficients and field coefficients, as described herein, for the Ising spin model problem. A solution for the traveling salesman problem may be computed from a solution for the Ising spin model problem with the corresponding coupling coefficients and field coefficients. Such mappings are known.

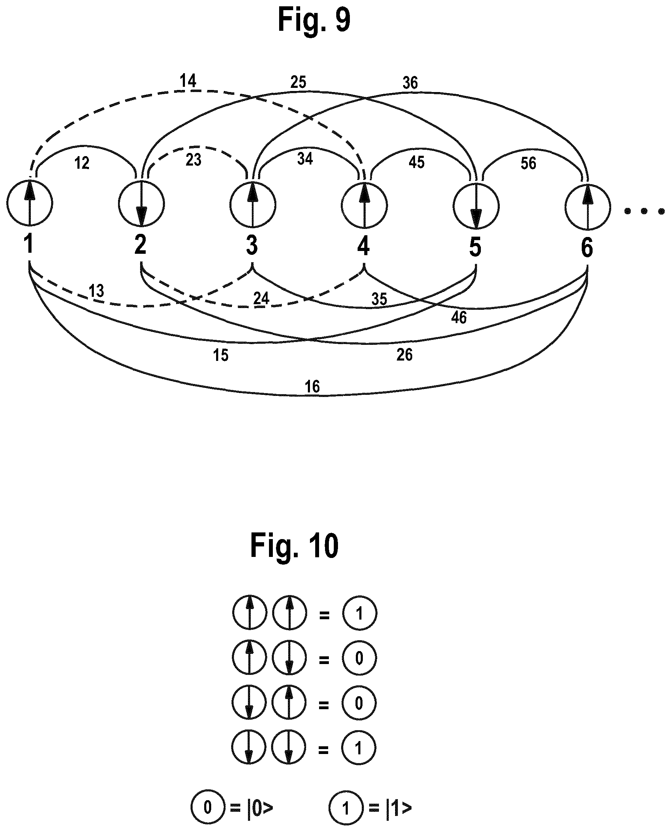

According to embodiments, determining the problem-encoding configuration may include determining the problem-encoding configuration from the long-range spin model, e.g. from an Ising spin model. A specific way to perform this determination is described in more detail with respect to Figs. 9-12.

According to embodiments, which can be combined with other embodiments described herein, the long-range spin model may be a long-range spin model with m-body interactions, wherein m is 1, 2 or 3.

The quantum system includes a plurality of ancillary particles. The plurality of ancillary particles may be different from the plurality of qubits as described herein. Each ancillary particle is an ancillary qubit. In some implementations, such as e.g. quantum systems involving trapped ions as described herein, it is possible to displace particles between different spatial positions ("shuttling" of ancillary particles). According to embodiments, a displacement of ancillary particles can be used to perform unitary operations on the actual (non-ancillary) qubits of the system. Particularly, a short-range unitary operator is applied to a subgroup of the plurality of qubits by moving an ancillary particle between different positions adjacent to the respective qubits in the subgroup of qubits. In other words, by performing shuttling of ancillary particles, the ancillary particles can "mediate" an interaction between a subgroup of the qubits.

A quantum system as described herein may include a plurality of ancillary particles including a first ancillary particle. The method as described herein may include coupling a first qubit of the plurality of qubits with the first ancillary particle. The method may include moving the first ancillary particle from the first qubit to a second qubit of the plurality of qubits. The method may include coupling the second qubit with the first ancillary particle.

Coupling a qubit with an ancillary particle, as described herein, may include evolving the qubit and the ancillary particle by a short-range unitary operation, particularly a 2-body unitary operating acting on the qubit and the ancillary particle only. The short-range unitary operation may be a CNOT operation.

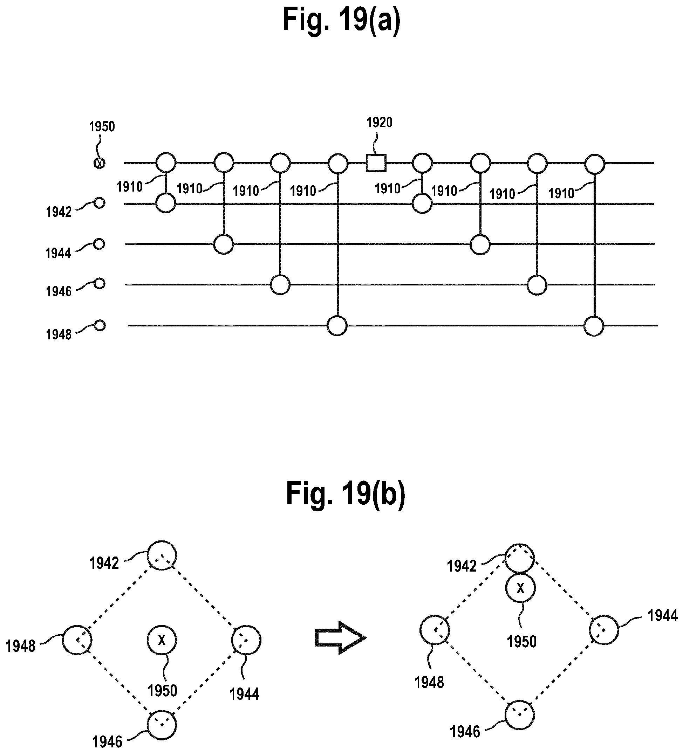

For quantum systems arranged on a 2-dimensional lattice, plaquette interactions can be realized by performing shuttling. An ancillary particle can be provided at each plaquette. The ancillary particle of a plaquette can be shuttled to each qubit of the plaquette and interact therewith. Possibly several rounds of shuttling are undertaken, i.e. the ancillary particle can visit each qubit of the plaquette several times. Accordingly, a unitary operator acting jointly on all qubits of the plaquette can be realized. For example, by performing shuttling, plaquette operators of the form $\exp(ic\sigma_z \otimes \sigma_z \otimes \sigma_z \otimes \sigma_z)$ can be performed, as will be described below with respect to Figs. 19(a)-(c).

According to embodiments, the plurality of qubits is arranged on a 2-dimensional lattice. The 2-dimensional lattice has a plurality of plaquettes. Each ancillary particle of the plurality of ancillary particles is located at a plaquette of the 2-dimensional lattice. The plurality of plaquettes includes a first plaquette. The plurality of ancillary particles includes a first ancillary particle. The method described herein includes coupling a first qubit of the first plaquette with the first ancillary particle. The method includes moving the first ancillary particle from the first qubit to a second qubit of the first plaquette. The method includes coupling the second qubit with the first ancillary particle.

The method includes moving the first ancillary particle from the second qubit to a third qubit of the first plaquette. The method includes coupling the third qubit with the first ancillary particle.

The method includes moving the first ancillary particle from the third qubit to a fourth qubit of the first plaquette. The method includes coupling the fourth qubit with the first ancillary particle.

The method as described herein may include maintaining the quantum system at an operating temperature of 50 mK or below, in particular 1 mK or below.

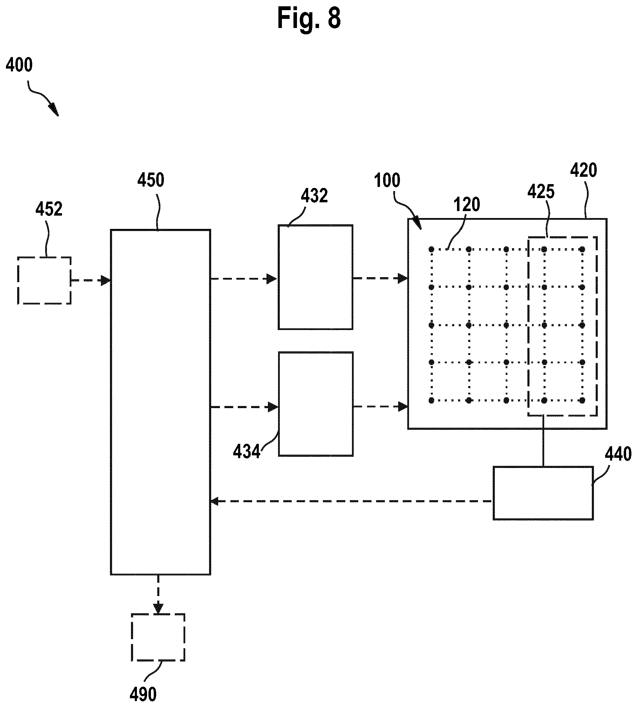

According to a further embodiment, and as illustrated in Fig. 8, an apparatus 400 for quantum computing is provided. The apparatus 400 includes a quantum system 420 comprising a plurality of qubits 120 as described herein. The apparatus 400 includes a classical computing system 450. The classical computing system 450 is configured for receiving, as an input, a computational problem 452 as described herein. The classical computing system 450 is configured for encoding the computational problem 452 into a problem Hamiltonian, as described herein, of the quantum system. The problem Hamiltonian is a single-body Hamiltonian comprising a plurality of adjustable parameters. The encoding comprises determining, from the computational problem, a problem-encoding configuration for the plurality of adjustable parameters. The apparatus 400 includes a single-body processing device 432 connected to the classical computing system 450. The single-body processing device 432 is configured for receiving, from the classical computing system 450, the problem-encoding configuration of the plurality of adjustable parameters. The single-body processing device 432 is configured for evolving the quantum system 420 according to a time evolution of the problem Hamiltonian, particularly a unitary time evolution of the problem Hamiltonian. The apparatus 400 includes a short-range coupling device 434 connected to the classical computing system 450, the short-range coupling device 434 being configured for evolving the quantum system 420 according to a time evolution, particularly a unitary time evolution, of one or more short-range Hamiltonians. The apparatus 400 includes a measurement device 440 connected to the classical computing system 450, the measurement device being 440 configured to measure at least a portion 425 of the plurality of qubits 100. The classical computing system 450 is further configured for receiving one or more measurement outcomes from the measurement device 440. The classical computing system 450 is further configured for instructing the single-body processing device 432 and/or the short-range coupling device 434. The classical computing system 450 is configured for outputting a result 490 of the quantum computation.

An apparatus as described herein is configured for performing embodiments of the method described herein.

An apparatus as described herein is configured for performing N rounds of operations, as described herein.

A classical computing system as described herein is configured for determining a sequence of unitary operators of each of the N rounds of operations as described herein. Each unitary operator in the sequence is a unitary operator being a unitary time evolution of the problem Hamiltonian, wherein the plurality of adjustable parameters of the problem Hamiltonian are in the problem-encoding configuration, or a unitary operator being a product of two or more short-range unitary operators.

An apparatus as described herein is configured for evolving the quantum system by applying the sequence of unitary operators of each of the N rounds of operations to the quantum system, as described herein. The single-body processing device is configured for performing each unitary operator of the sequence of unitary operators being a unitary time evolution of the problem Hamiltonian. The short-range coupling device is configured for performing each unitary operator of the sequence of unitary operators being a short-range operator.

A measurement device as described herein is configured for performing a measurement of one or more qubits of the quantum system for each of the N rounds of operations.

A classical computing system as described herein is configured for outputting a result of the quantum computation.

A classical computing system as described herein may be configured for instructing the single-body processing device and/or the short-range coupling device based on one or more measurement outcomes received by the classical computing system from the measurement device. The N rounds of operations may include one or more adaptive rounds of operations. The classical computing system may be configured for determining the unitary operators of the sequence of unitary operators of each adaptive round based on at least one measurement outcome of a measurement performed in a previous round of the N rounds of operations.

A measurement device as described herein may be configured for measuring an energy of the quantum system as described herein, e.g. an energy of a first quantum state as described herein and/or an energy of a second quantum state as described herein.

A classical computing system as described herein may be configured for comparing a first energy with a second energy. For example, the classical computing device may be configured for comparing an energy of a first quantum state as described herein with an energy of a second quantum state as described herein.

A classical computing system as described herein may be configured for determining a sequence of unitary operators to be applied in a future round of the N rounds of operations, wherein the sequence of unitary operators to be applied in the future round is determined based at least on the comparison of the first energy with the second energy.

The quantum system may include a plurality of ancillary particles. The apparatus may be configured for displacing at least a first ancillary particle of the plurality of ancillary particles from a first position to a second position.

The short-range coupling device can be configured for coupling a first qubit of the plurality of qubits with the first ancillary particle. The apparatus may be configured for moving the first ancillary particle from the first qubit to a second qubit of the plurality of qubits. The short-range coupling device may be configured for coupling the second qubit with the first ancillary particle.

According to embodiments, the plurality of qubits is arranged on a 2-dimensional lattice. The 2-dimensional lattice has a plurality of plaquettes. Each ancillary particle of the plurality of ancillary particles is located at a plaquette of the 2-dimensional lattice. The plurality of plaquettes includes a first plaquette. The plurality of ancillary particles may include a first ancillary particle. The short-range coupling device is configured for coupling a first qubit of the first plaquette with the first ancillary particle. The apparatus is configured for moving the first ancillary particle from the first qubit to a second qubit of the first plaquette. The short-range coupling device is configured for coupling the second qubit with the first ancillary particle.

According to a further embodiment, an apparatus for quantum computing is provided. The apparatus includes a quantum system comprising a plurality of superconducting qubits. The apparatus includes a controller. The apparatus includes a flux bias assembly connected to the controller, the flux bias assembly comprising a plurality of flux bias units configured for generating a plurality of adjustable time-dependent magnetic fluxes, wherein each adjustable time-dependent magnetic flux acts on a single superconducting qubit in the plurality of superconducting qubits. The apparatus includes a coupling device connected to the controller, the coupling device comprising at least one superconducting quantum interference device configured for coupling the plurality of superconducting qubits according to one or more short-range Hamiltonians. The apparatus includes a measurement device connected to the controller, the measurement device being configured to measure at least a portion of the plurality of qubits. The controller is configured for instructing the flux bias assembly and the coupling device to evolve the quantum system according to a sequence of operations. The controller is configured for instructing the flux bias assembly to evolve the quantum system by a time evolution of a problem Hamiltonian, wherein the problem Hamiltonian is a single-body Hamiltonian comprising a plurality of adjustable parameters, wherein the plurality of adjustable parameters encode a computational problem. The controller is configured for instructing the coupling device to evolve the quantum system according to a time evolution of a short-range Hamiltonian.

The plurality of superconducting qubits is arranged according to a 2-dimensional lattice.

A superconducting quantum interference device as described herein may be configured for coupling the plurality of superconducting qubits according to a plaquette Hamiltonian.

A plurality of flux bias units as described herein may be a plurality of magnetic, AC and/or DC flux bias units.

A controller as described herein can be or include a classical computing system as described herein.

The apparatus is configured for performing embodiments of the method described herein. The apparatus may be an apparatus for gate-based quantum computing.

The apparatus is configured for performing N rounds of operations, as described herein.

A controller as described herein is configured for determining a sequence of unitary operators of each of the N rounds of operations as described herein. Each unitary operator in the sequence may be a unitary operator being a unitary time evolution of the problem Hamiltonian, wherein the plurality of adjustable parameters of the problem Hamiltonian are in the problem-encoding configuration, or a unitary operator being a product of two or more short-range unitary operators.

The apparatus is configured for evolving the quantum system by applying the sequence of unitary operators of each of the N rounds of operations to the quantum system, as described herein. The flux bias assembly may be configured for performing each unitary operator of the sequence of unitary operators being a unitary time evolution of the problem Hamiltonian. The coupling device may be configured for performing each unitary operator of the sequence of unitary operators being a short-range operator.

The measurement device is configured for performing a measurement of one or more qubits of the quantum system for each of the N rounds of operations.

The controller is configured for outputting a result of the quantum computation.

The controller may be configured for instructing the flux bias assembly and/or the coupling device based on one or more measurement outcomes received by the controller from the measurement device. The N rounds of operations may include one or more adaptive rounds of operations. The controller may be configured for determining the unitary operators of the sequence of unitary operators of each adaptive round based on at least one measurement outcome of a measurement performed in a previous round of the N rounds of operations.

The measurement device may be configured for measuring an energy of the quantum system as described herein, e.g. an energy of a first quantum state as described herein and/or an energy of a second quantum state as described herein.

The controller may be configured for comparing a first energy with a second energy. For example, the controller may be configured for comparing an energy of a first quantum state as described herein with an energy of a second quantum state as described herein.

The controller may be configured for determining a sequence of unitary operators to be applied in a future round of the N rounds of operations, wherein the sequence of unitary operators to be applied in the future round is determined based at least on the comparison of the first energy with the second energy. The quantum system may include a plurality of ancillary superconducting qubits. The apparatus may be configured for displacing at least a first ancillary superconducting qubit of the plurality of ancillary superconducting qubits from a first position to a second position.

The coupling device can be configured for coupling a first superconducting qubit of the plurality of superconducting qubits with the first ancillary superconducting qubit. The apparatus may be configured for moving the first ancillary superconducting qubit from the first superconducting qubit to a second superconducting qubit of the plurality of superconducting qubits. The coupling device may be configured for coupling the second superconducting qubit with the first ancillary superconducting qubit.

According to embodiments, the plurality of superconducting qubits is arranged on a 2-dimensional lattice. The 2-dimensional lattice has a plurality of plaquettes. Each ancillary superconducting particle of the plurality of ancillary superconducting particles is located at a plaquette of the 2-dimensional lattice. The plurality of plaquettes includes a first plaquette. The plurality of ancillary superconducting particles includes a first ancillary superconducting particle. The coupling device is configured for coupling a first superconducting qubit of the first plaquette with the first ancillary superconducting particle. The apparatus is configured for moving the first ancillary superconducting particle from the first superconducting qubit to a second superconducting qubit of the first plaquette. The coupling device is configured for coupling the second superconducting qubit with the first ancillary superconducting particle.

Further aspects of the present disclosure are described with respect to Figs. 9-12. A specific encoding of a computational problem into a problem Hamiltonian is described, namely an encoding of an Ising spin model problem with long-range interactions into a single-body problem Hamiltonian. The (classical) Ising spin model problem with long-range interactions is NP-complete, and its quantization is trivial so that no distinction between the classical and quantum Ising spin model will be made herein. Mappings of other classical computational problems to the Ising spin model problem are known.

The case of the Ising spin model problem which includes only d-body interactions with d smaller or equal to two is considered. The specific encoding starts from the Ising spin model problem for n spins, as described herein, with at most two-body interactions and corresponding coupling coefficients $c_{ij}$. The indices i and j may range from 1 to n with j being smaller than i. In a first case, all field coefficients $c_i$ are equal to zero. Fig. 9 illustrates an Ising spin model problem for n = 6 spins, wherein the spins are labeled from 1 to 6. There are $n(n - 1)/2 = 15$ pairwise interactions between the spins, as indicated in Fig. 9 by the lines connecting pairs of spins. For example, the line indicated with 12 represents a pairwise interaction between the spins 1 and 2. The fifteen pairwise interactions correspond to fifteen coupling coefficients $c_{ij}$. The interactions are long-range interactions.

For every pair of spins in the Ising spin model, a corresponding qubit in the quantum system is provided. For example, for the 6 spins with fifteen pairwise interactions shown in Fig. 9, the corresponding quantum system includes fifteen qubits. A configuration of spins in the Ising spin model is mapped to a configuration of the corresponding qubits. Therein, the configuration of the qubits depends on a relative orientation of the spins. A pair of spins pointing in the same direction (parallel alignment) are mapped to a qubit in the quantum basis state "$|1\rangle$". Further, a pair of spins pointing in opposite directions (antiparallel alignment) are mapped to a qubit in the quantum basis state "$|0\rangle$". This mapping is illustrated in Fig. 10. In Fig. 10, the labels 0 and 1 correspond to the quantum basis states $|0\rangle$ and $|1\rangle$, respectively.

The coupling coefficients $c_{ij}$ of the Ising spin model are mapped to a plurality of adjustable parameters $J_k$ of a problem Hamiltonian encoding the computational problem, in this case the Ising spin model problem. The problem Hamiltonian has the form $\Sigma_k J_k \sigma_z^{(k)}$, wherein $k = n*i + j$ and wherein k ranges from 1 to M with $M = n(n-1)/2$. The Ising spin model problem is mapped to the problem Hamiltonian in such a way that the adjustable parameters

$J_k$ of the problem Hamiltonian represent the interactions between the spins in the Ising spin model, corresponding to the coupling coefficients $c_{ij}$.

The number of qubits needed for encoding the the Ising spin model problem in the problem Hamiltonian increases quadratically compared to the Ising spin model problem for n spins, because the number of two-body interactions between the spins is equal to $M = n(n - 1)/2$. According to some embodiments, additional degrees of freedom may be considered.

The total number of qubits in the quantum system may be M + n - 2 or more, wherein n-2 additional ancillary qubits and/or additional auxiliary qubits may be added for reasons explained below. Accordingly, the number of qubits may be greater than the number of spins n. In particular, the number of qubits may be the number of spins n plus M - 2 additional degrees of freedom. The problem Hamiltonian has the advantage that it allows a programming of the quantum processing device with only local interactions, in particular single-body interactions with external fields.

The increased number of degrees of freedom of the quantum system compared to the Ising spin model is compensated by a short-range Hamiltonian which is the sum of M - n 4-body summand Hamiltonians $C_l$, called constraint Hamiltonians representing constraints for fixing a portion of the qubits. The short-range Hamiltonian has the form $\Sigma_l C_l$, wherein the index l ranges from 1 to $(n^2 - 3n)/2$ and wherein each summand Hamiltonian $C_l$ is a constraint Hamiltonian which may have the form

$$C_l = -C \left( \sum_{m=n,e,s,w} \tilde{\sigma}_z^{(l,m)} + S_z^l \right)^2$$
$$= -C \tilde{\sigma}_z^{(l,n)} \tilde{\sigma}_z^{(l,e)} \tilde{\sigma}_z^{(l,s)} \tilde{\sigma}_z^{(l,w)}.$$

In reference to the above equation, two possible implementations of the constraint Hamiltonians may be considered. The sum in the above equation may represent an ancilla-based implementation. The sum runs over the four members of a plaquette (north, east, south, west) of a 2-dimensional lattice according to which the qubits are arranged. Further, each $S_z^l$ is an operator acting on an ancillary qutrit included in the quantum system. An ancillary qutrit has a basis consisting of three basis states which, in this embodiment, will be labeled 10>, |2>, and 14>. The second implementation of the short-range Hamiltonians is an interaction-based implementation that does not require ancillary qutrits. According to the interaction-based implementation, $C_l$ is a four-body interaction between qubits forming a plaquette of the lattice. Further, in the above equation, C represents a constraint strength, e.g. a constant constraint strength.

As described above, the encoding of the Ising spin model in the problem Hamiltonian involves mapping configurations of spins of the Ising spin model onto configurations of qubits in the quantum system, wherein a configuration of qubits depends on the relative orientation of pairs of spins in the corresponding configuration of spins. To provide a consistent mapping, aspects relating to closed loops in the Ising spin model are taken into account, as discussed in the following. In each closed loop of spins in the Ising spin model, the number of pairs of spins having an anti-parallel alignment is an even number. For example, with reference to Fig. 9, consider e.g. the closed loop formed by the connections 14, 24, 23 and 13 as indicated by the dashed lines. The closed loop includes the spins 1, 2, 3 and 4. Any configuration of the spins 1, 2, 3 and 4 includes zero, two or four pairs of anti-parallel spins. No configuration of the spins 1, 2 3 and 4 has one or three pairs of anti-parallel spins. Accordingly, every configuration of the spins 1, 2, 3 and 4 has an even number of anti-parallel spins.

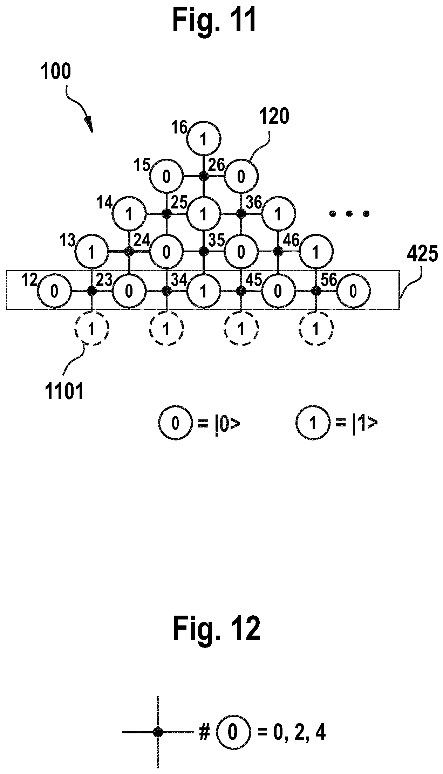

Since pairs of antiparallel spins are mapped to qubits being in the quantum basis state |0>, every set of qubits in the quantum system corresponding to a closed loop of spins in the Ising spin model has an even number of quantum basis states |0>. This provides a set of constraints for at least a portion of the qubits of the quantum system. For example, for the closed loop discussed above with reference to Fig. 9, the corresponding group of four qubits is shown in Fig. 11, indicated with reference numerals 14, 24, 23 and 13 in view of the correspondence between pairs of spins in the Ising model and qubits in the quantum system. A shown in Fig. 11, the qubits 14, 24, 23 and 13 correspond to a plaquette of the 2-dimensional lattice 120. In view of the constraint on the closed loop as described above, any configuration of quantum basis states for the qubits 14, 24, 23 and 13 includes either zero, 2 or four quantum basis states |0>, as illustrated in Fig. 12.

To ensure that the constraints corresponding to all closed loops are satisfied, it is sufficient to enforce constraints associated to a suitable subset of closed loops. According to this embodiment, particular building blocks of closed loops involving groups of at most four spins are sufficient to ensure that that all constraints are satisfied, so that a consistent mapping from the Ising spin model to the quantum system provided. The building blocks include closed loops consisting of four spins connected by four connections, wherein one connection has an index distance s, two connections have index distance s + 1 and one connection has index distance s + 2. Therein, s ranges from 1 to N - 2 and the notion of an "index distance" between spins $s_i$ and $s_j$ refers to the number |i - j|. The set of building block closed loops with s = 1 provide n - 2 constraints. For example, the closed loop including the connections 14, 24, 23 and 13 between spins 1, 2, 3 and 4, as shown in Fig. 9 and as described above, is a building block closed loop with s = 1.

A further aspect relates to the boundary of the quantum system. Some building block closed loops involve a group of three spins connected with three connections, instead of four spins connected with four connections. For example, in reference to Fig. 9, the closed loop including the connections 12, 23 and 13 between the spins 1, 2 and 3 may be considered in this respect. The corresponding group of qubits in the quantum system includes three qubits 12, 23 and 13 arranged according to triangular-shaped plaquette of the 2-dimensional lattice. To enforce the constraint corresponding to the closed loop of three spins, a 3-body constraint Hamiltonian $C_l$ may be considered acting on the corresponding group of three qubits. Alternatively, an additional line of n- 2 auxiliary qubits fixed in the quantum basis state |1> may be included in the quantum system, as shown in Fig. 11 by the circles with dashed lines. To enforce a constraint corresponding to a closed loop of three spins, e.g. the closed loop corresponding to the qubits 12, 23 and 13, a constraint Hamiltonian $C_l$ may be considered acting on the corresponding three qubits and on one of the auxiliary qubits, namely the auxiliary qubit 1101 shown in Fig. 11. Accordingly, the constraint Hamiltonian $C_l$ is a 4-body Hamiltonian acting on a plaquette of an enlarged 2-dimensional lattice, having the same form as described above. The latter realization has the advantage that all constraint Hamiltonians can be treated on the same footing, since all constraint Hamiltonians are 4-body Hamiltonians corresponding to plaquettes of a 2-dimensional lattice.

The constraint Hamiltonians $C_l$ ensure that the constraints corresponding to the building block closed loops, and thus the constraints corresponding to all closed loops, are satisfied. Accordingly, the short-range Hamiltonian provides for a consistent mapping from constraints on the spins in the Ising spin model to constraints imposed on the quantum system.

A total Hamiltonian $H_T$ is considered, wherein the total Hamiltonian $H_T$ is the sum of the problem Hamiltonian $H_P = \Sigma_k J_k \sigma_z^{(k)}$ and the short-range Hamiltonian $H_{SR} = \Sigma_l C_l$. In other words, $H_T = H_P + H_{SR} = \Sigma_k J_k \sigma_z^{(k)} + \Sigma_l C_l$. In light of the above, the total Hamiltonian has the following property: if the quantum system is in the ground state of the final Hamiltonian, of portion of the qubits will be in a configuration of quantum basis states corresponding to a configuration of spins in the ground state of the Ising spin model. Particularly, the qubits in the portion 425 shown in Fig. 11 will be in a configuration of quantum basis states corresponding to a configuration of spins in the ground state of the Ising spin model. If the quantum system is in a thermal state of the total Hamiltonian close to the ground state, i.e. at sufficiently low temperature, the property in question is true with high probability.

Accordingly, measuring the portion 425 allows determining a solution to the Ising spin model problem, at least with a high probability. If, after the N rounds of operations have been performed, the quantum system is in a quantum state which well-approximated by the ground state of the total Hamiltonian, then measuring the portion 425 will at least provide information about the ground state of the Ising model, from which a trial solution can be computed. It can then be tested by classical computing in polynomial time whether the trial solution is a true solution and, if not, the computation can be continued until a true solution is found.

As a further advantage of embodiments described herein, since information about the Ising spin model is encoded in a redundant manner in the quantum system, a variety of possible groups of qubits can be measured to provide a readout from which a solution to the computational problem can be determined.

In light of the above, the construction of the short-range Hamiltonian according to this embodiment is such that (i) the constraints cover all interactions between the spins, (ii) the number of constraints is $(n^2 - 3n)/2$ and (iii) the short-range Hamiltonian can be realized on a simple 2-dimensional geometry with d-body interactions, wherein d = 4, and wherein interactions correspond to plaquettes of the 2-dimensional lattice. Further, this embodiment allows for a scalable implementation, since adding one spin in the Ising spin model is equivalent to adding a line of n spins to the quantum system.

The embodiment described with reference to Figs. 9-12 relates to an Ising spin model involving pairwise interactions between n spins, wherein the field coefficients are zero.

A similar encoding can be considered for an Ising spin model with non-zero field coefficients. An additional spin $s_{n+1}$ can be included in the Ising model, wherein $s_{n+1}$ is fixed to the value +1. The non-zero field coefficients may then be reformulated as coupling coefficients between the n spins and the additional spin $s_{n+1}$. The Ising spin model with non-zero field coefficients is thus mapped to an Ising spin model wherein the field coefficients are zero. A mapping to a quantum system in the manner described above can thus be applied. Adding the additional spin $s_{n+1}$ involves including an additional line of n qubits to the quantum system.

As discussed above, the ground state of the total Hamiltonian $H_T = H_P + H_{SR} = \Sigma_k J_k \sigma_z^{(k)} + \Sigma_l C_l$ contains information about the solution of the computation problem (Ising spin model problem), such that measuring the ground state allows computing a solution of the computational problem. Embodiments described herein provide a method for generating a quantum state which approximates the ground state of the total Hamiltonian.

An interpolation Hamiltonian having the form $H(t) = A(t) H_X + B(t) H_T$ may be considered. Therein, $H_X$ is single-body Hamiltonian ("driver Hamiltonian") such as e.g. $H_X = \Sigma_k \sigma_x^{(k)}$, t is a time parameter, and A(t) and B(t) are interpolation coefficients depending on the time parameter t. For t being an initial time $t_0$, the interpolation coefficient $A(t_0)$ may be equal to 1 and $B(t_0)$ may be equal to 0, so that $H(t_0)$ is equal to the single-body Hamiltonian $H_X$. For t being a final time $t_{fin}$, the interpolation coefficient $A(t_{fin})$ may be equal to 0 and $B(t_{fin})$ may be equal to 1, so that $H(t_{fin})$ is equal to the total Hamiltonian $H_T$. In view of e.g. the adiabatic theorem of quantum mechanics, but without wishing to be bound to any particular theory, if at the initial time $t_0$ the quantum system starts out in a ground state of the single-body Hamiltonian $H_X$, and if the time parameter t is gradually increased from the initial time $t_0$ to the final time $t_{fin}$, and if the time period from $t_0$ to $t_{fin}$ is sufficiently long, then after said time period has elapsed the state of the quantum system will be the ground state of the total Hamiltonian $H_T$ or will at least be well-approximated by the ground state of the total Hamiltonian $H_T$. In other words, the time evolution of the interpolation Hamiltonian H(t), which is a time-dependent Hamiltonian, will result in a ground state of the total Hamiltonian $H_T$. Since H(t) has the form H(t) = A(t) $\Sigma_k \sigma_x^{(k)}$ + B(t) $\Sigma_k J_k \sigma_z^{(k)}$ + B(t) $\Sigma_l C_l$, and by using the Trotter product formula for decomposing exponentials of sums of non-commuting operators, the inventors have found that the unitary time evolution of H(t) can be approximated, to an arbitrary degree of accuracy, by a sequence of unitary operators wherein each unitary operator in the sequence is

(a) a unitary operator exp($iaH_P$) being a unitary time evolution of the problem Hamiltonian $H_P = \Sigma_k J_k \sigma_z^{(k)}$, wherein the plurality of adjustable parameters $J_k$ are in the problem-encoding configuration, or

(b) a unitary operator being a product of two or more short-range unitary operators.

More specifically, each short-range unitary operator belonging to case (b) can be an operator either of the form exp($ib\sigma_x$) or of the form exp($ic\sigma_z \otimes \sigma_z \otimes \sigma_z \otimes \sigma_z$), where $\sigma_z \otimes \sigma_z \otimes \sigma_z \otimes \sigma_z$ represents a (tensor) product of four Pauli operators $\sigma_z$ associated with four respective qubits forming a plaquette of the 2-dimensional lattice. The quantities a, b and c of the operators exp($iaH_P$), exp($ib\sigma_x$) and exp($ic\sigma_z \otimes \sigma_z \otimes \sigma_z \otimes \sigma_z$) are parameters.

By performing N rounds of operations in which the quantum system is evolved according to sequences of unitary operators wherein each operator belongs to case (a) or (b), an (approximation of ) the ground state of the ground state of the total Hamiltonian $H_T = H_P + H_{SR} = \Sigma_k J_k \sigma_z^{(k)} + \Sigma_l C_l$ can be determined. The parameters a, b and c of the operators exp($iaH_P$), exp($ib\sigma_x$) and exp($ic\sigma_z \otimes \sigma_z \otimes \sigma_z \otimes \sigma_z$) can be varied (variational parameters) in different rounds. The constraint strengths c are free parameters because the low energy subspace is gauge invariant under a change in $\sigma_z \otimes \sigma_z \otimes \sigma_z \otimes \sigma_z$. With the separation of interactions and local fields, the operators exp($iaH_P$) and exp($ib\sigma_x$) can be realized as (products of) single-qubit rotations and phase rotations. The only programmable (and therefore disordered) Hamiltonian is $H_P$. The operators containing the interactions (i.e. exp($ic\sigma_z \otimes \sigma_z \otimes \sigma_z \otimes \sigma_z$)) are problem-independent. Due to this independence of interactions and encoded problem the two-qubit gates are uniform and in the following a parallelizable implementation is discussed.

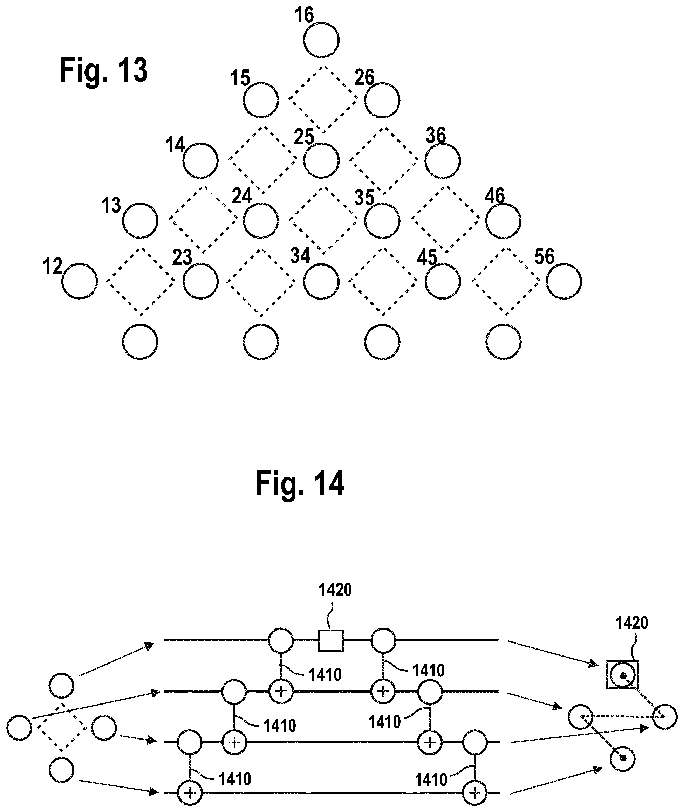

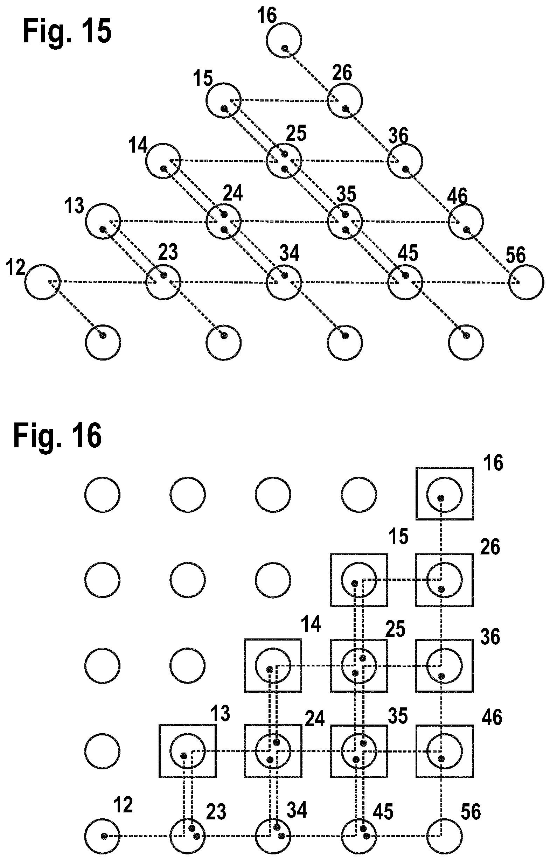

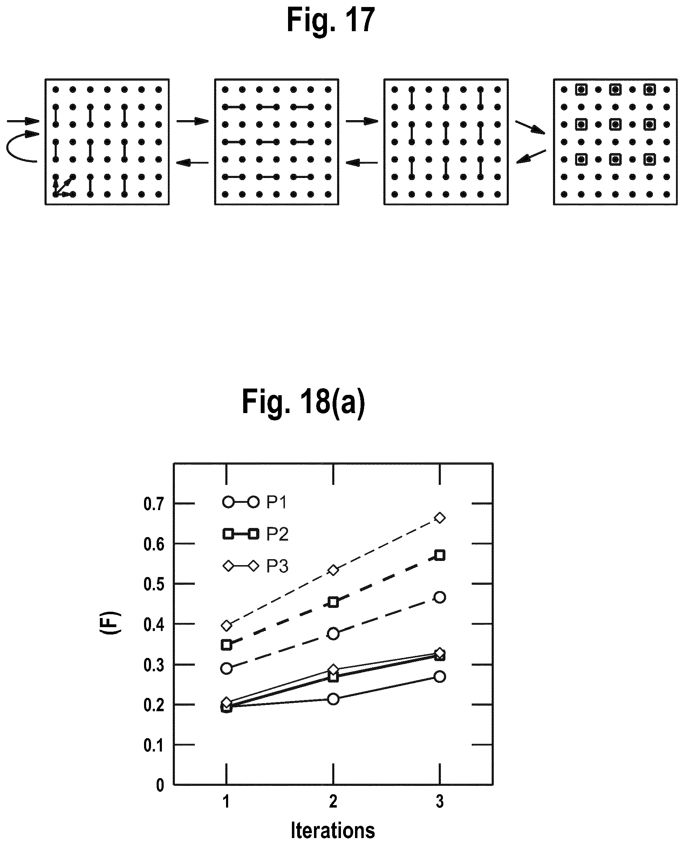

Fig. 13 shows an example of plurality of qubits arranged according to a 2-dimensional lattice. The z-component of the qubits (represented as circles) represent relative coordinations of two spins i and j (represented by labels 12, 13, ...) and the optimization problem is encoded in the local fields acting on individual qubits as described herein, e.g. in relation to Figs. 9-12. The interactions are 4-body interactions associated with plaquettes of the lattice, represented in Fig. 13 by squares. The 4-body interactions required for realizing the unitary operators exp($ic\sigma_z \otimes \sigma_z \otimes \sigma_z \otimes \sigma_z$) are problem inde-pendent and thus identical for each plaquette. These individual plaquette terms be can realized as shown in Fig. 14 using six CNOT gates 1410 and one single-qubit rotation 1420 (z-rotation). The first three CNOT gates can be performed along a path connecting all 4 qubits, followed by the single-qubit rotation 1420, followed by the last three CNOT gates performed along the path in reverse order. A z-shaped path as shown in Fig. 14 can be used. Other paths, e.g. a clockwise path along a plaquette, are also possible. Using the gate sequence shown in Fig. 14 to realize each plaquette operator ex-p($ic\sigma_z \otimes \sigma_z \otimes \sigma_z \otimes \sigma_z$)) results in the particular connectivity graph as shown in Fig. 15. By realignment to a 2-dimensional regular square lattice, as shown in Fig. 16, the CNOT gates act on nearest neighbors only. The plaquette interactions translate to a sequence of CNOT gates along lines that connect two plaquettes in the physical graph. As these interactions are identical for all plaquette, they can be executed in parallel. Fig. 17 shows an example of sequence of parallel CNOT gates (represented by lines) and Z rotations (represented by squares) to realize all 4-body interactions consisting of 7 parallel gate operations. To reach all plaquettes, the pattern is then shifted up by one row, shifted to the right by one column and shifted up-and-right (represented by arrows) and repeated. Thus a total number of 28 parallel gates is used to realize all constraints independent of the system size.

While Figs. 13-17 show the example of a two-dimensional square lattice with four-body plaquettes, other two-dimensional lattices (e.g. hexagonal lattice) can be treated in a similar manner.

The strength of the plaquette constraints $c\sigma_z \otimes \sigma_z \otimes \sigma_z \otimes \sigma_z$ are determined by the z-rotation alone. Further, the CNOT gates are independent of the problem and also independent of the constraints. Thus, only local Z operations contain disorder and all CNOT gates are problem-independent and parallelizable on a two dimensional grid.

As described herein, some embodiments involve a feedback driven method (adaptive rounds of operations, as described herein). The feedback involves performing measurements after applying a sequence of unitary operators and using classical optimization methods to improve the parameters a, b and c of the operators exp($iaH_P$), exp($ib\sigma_x$) and exp($ic\sigma z \otimes \sigma z \otimes \sigma z \otimes \sigma z$). As mentioned above, the parameters a, b and c of the operators are free parameters which can be varied. Accordingly, embodiments described herein provide the advantage that a large set of parameters can be varied, i.e. there is a large set of degrees of freedom, allowing to compute a solution to the computational problem in an efficient manner.

Embodiments described herein allow for at least two possible algorithmic directions of improvement: i) the protocol that determines the order and form of the operators in the sequence of unitary operators and ii) the choice of parameters a, b, c that are varied. As an illustration, in order to compare the different approaches we keep the number of feedback iterations fixed as this is the limiting factor in experiment. The initial state for each round of operations is chosen to be the uniform superposition in the computational basis, i.e. every qubit is in the state |+> = |0> + |1>. We consider for illustration three particular protocols P1, P2 and P3:

$$P_1 = T(a_1) \, X(b_1) \, T(a_2) \, X(b_2) \, \cdots;$$

$$P_2 = U(a_1) \, V(c_1) \, X(b_1) \, U(a_2) \, V(c_2) \, X(b_2) \, \cdots;$$

and

$$P_3 = U(a_1) \, V(\{c_{pl}\}) \, X(b_1) \, U(a_2) \, V(\{c_{pl}\}) \, X(b_2) \, \cdots;$$

Therein, $T(a) = \exp(-iaH_P) \cdot \Pi_{pl} \exp(-ia\sigma_z \otimes \sigma_z \otimes \sigma_z \otimes \sigma_z)$, where $\Pi_{pl}$ is a product over all plaquettes of the 2-dimensional lattice. Further, $X(b) = \Pi_q \exp(-ib\sigma_x)$ where $\Pi_q$ is product over all qubits of the lattice. Further, $U(a) = \exp(-iaH_P)$. Further, $V(c) = \Pi_{pl} \exp(-ic\sigma_z \otimes \sigma_z \otimes \sigma_z \otimes \sigma_z)$, where the coefficient c is the same for each plaquette. Further, $V(\{C_{pl}\}) = \Pi_{pl} \exp(-ic_{pl}\sigma_z \otimes \sigma_z \otimes \sigma_z \otimes \sigma_z)$ where the coefficients $c_{pl}$ can be different for each plaquette. The first protocol $P_1$ alternates between time evolutions of the total Hamiltonian and time evolutions of the driver Hamiltonian. The second protocol $P_2$ makes use of the splitting between local field terms and interaction terms and optimizes the parameters a, b and c separately, but keeps the parameter c the same for all plaquettes. The third protocol $P_3$ also includes an update of the constraint strengths and thus the total Hamiltonian itself.

For the sake of illustration, but without intending to limit the scope, we can consider an optimization problem encoded in K = 6 qubits arranged on a square lattice with 3 plaquettes. The parameters can be optimized using the following Monte Carlo procedure:

1) The parameters are initialized such that a = 1 for the operator exp(-iaHP), b = 1 for each operator exp(-ib$\sigma$x) i.e. for each qubit, and c = 2 for each operator exp(-ic$\sigma$z$\otimes\sigma$z$\otimes\sigma$z$\otimes\sigma$z) i.e. for each plaquette. The interaction matrix of coupling coefficients is chosen randomly from the interval $c_{ij} \in \{-1, ..., 1\}$.

2) The final quantum states are prepared according to the above protocols P1, P2 and P3.

3) The expectation E of the total Hamiltonian and the fidelity F with respect to the ground state of the total Hamiltonian are determined.

4) This is repeated M = 4000 times and in each Monte Carlo step a randomly chosen parameter is updated by a random number in the range {-1, ..., 1}. The set of parameters is accepted if the expectation E decreases and rejected otherwise. For comparison we can also optimize parameters directly improving the fidelity F. In this case, the update is accepted if the fidelity increases.

5) This procedure is repeated for random instances of $c_{ij}$. The averages are taken over L = 2000 realizations. The three protocols are compared using the same instances for numbers of iteration m = 1, 2 and 3. In the third protocol the update of $\{c_{pl}\}$ is undertaken every 10th steps.

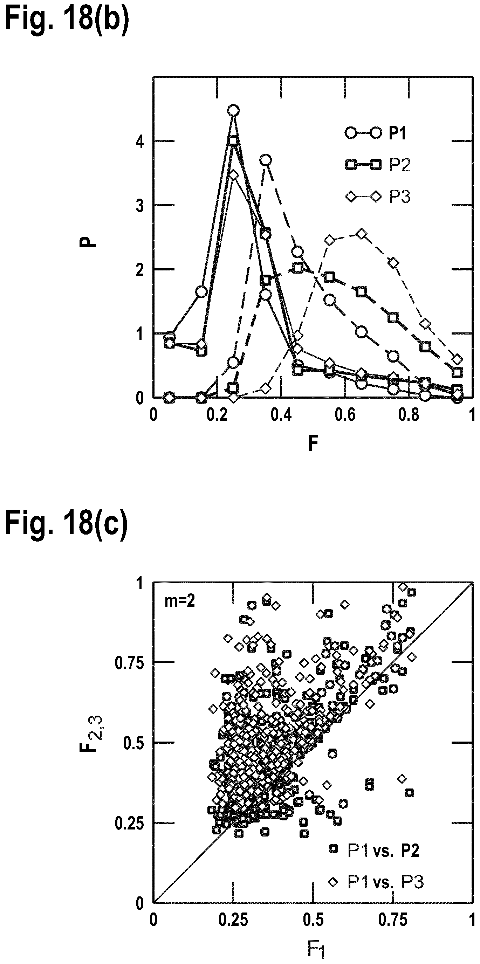

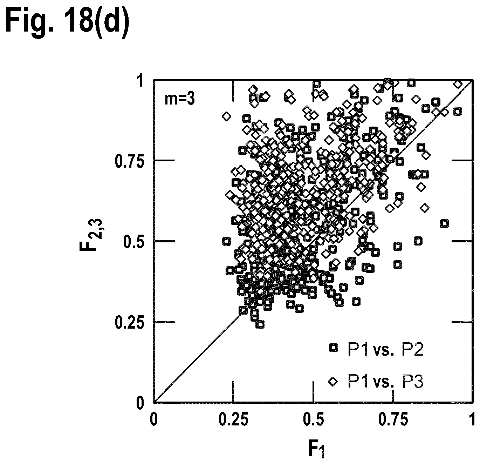

Figs. 18(a)-(d) depict the fidelity in comparison for protocols P1, P2 and P3. Fig. 18(a) shows an average fidelity defined as overlap of the final state with the ground state of the total Hamiltonian as a function of number of iteration cycles. An average is taken over L = 400 random instances optimizing F (represented by dashed lines) and L = 2000 instances optimizing the expectation value E (represented by solid lines). As shown, protocol P1 improves with number of iterations. Separation of the problem Hamiltonian (protocol P2) and optimizing also the constraints (protocol P3) improves the fidelity for all m, the number of iterations. Fig. 18(b) shows a normalized histogram P of the fidelity for the same parameters as in panel m = 3 iterations optimizing the expectation (solid lines) and the fidelity (dashed lines). Fig. 18(c) shows a scatter plot of the fidelity optimization with same parameters as in Fig. 18(a) with m = 2 iterations comparing direct fidelity optimization with protocol P1 against protocol P2 and a protocol P1 against protocol P3, respectively. Fig. 18(d) shows a scatter plot of the fidelity comparing protocols as in Fig. 18(c) with m = 3 iteration cycles.

As shown in Figs. 18(a-(d)-, the separation of local field terms and interaction terms is advantageous, and the additional optimization of constraints using protocol P3 does further improve the fidelity. Note that this protocol may result in a further improvement if more measurements are used. The histograms of the fidelities for the various protocols show that protocol P3 has the best average performance and also the largest contributions for fidelities close to F = 1 (see Fig. 18(b)). A direct comparison of protocols [see Figs. 18(c)-(d)] show that most instances result in a lower fidelity using protocol P1compared with protocol P3.

Figs. 19(a)-(c) illustrate how a plaquette operator of the form $\exp(ic\sigma_z\otimes\sigma_z\otimes\sigma_z\otimes\sigma_z)$ can be performed by shuttling of ancillary particles, as described herein.

Fig. 19(a) shows four qubits 1942, 1944, 1946 and 1948 and an ancillary qubit 1950. A sequence of nine unitary operations is shown, namely a first sequence of four CNOT gates 1910, followed by a single-qubit rotation $\exp(ic\sigma_z)$ represented by box 1920, followed by a second sequence of four CNOT gates 1910. Each of the CNOT gates acts on the ancillary qubit and one of the non-ancillary qubits. The single-qubit rotation $\exp(ic\sigma_z)$ acts on the ancillary qubit only.

Fig. 19(b) shows the four qubits 1942, 1944, 1946 and 1948 arranged as the qubits of a plaquette of a 2-dimensional lattice. The qubits 1942, 1944, 1946 and 1948 may be referred to as the "north", "east", "south" and "west" qubit, respectively of the plaquette. The ancillary qubit 1950 is located on the plaquette, in between the four qubits 1942, 1944, 1946 and 1948. The first sequence of four CNOT operations of Fig. 19(a) can be performed by moving the ancillary qubit 1950 to each qubit of the plaquette (and vice versa) and applying the respective CNOT gates. After these four CNOT operations have been performed, the single-qubit rotation $\exp(ic\sigma_z)$ can be applied to the ancillary qubit 1950. Thereafter, the second sequence of four CNOT operations can be performed by again moving the ancillary qubit 1950 to each qubit of the plaquette and applying the respective CNOT gates.

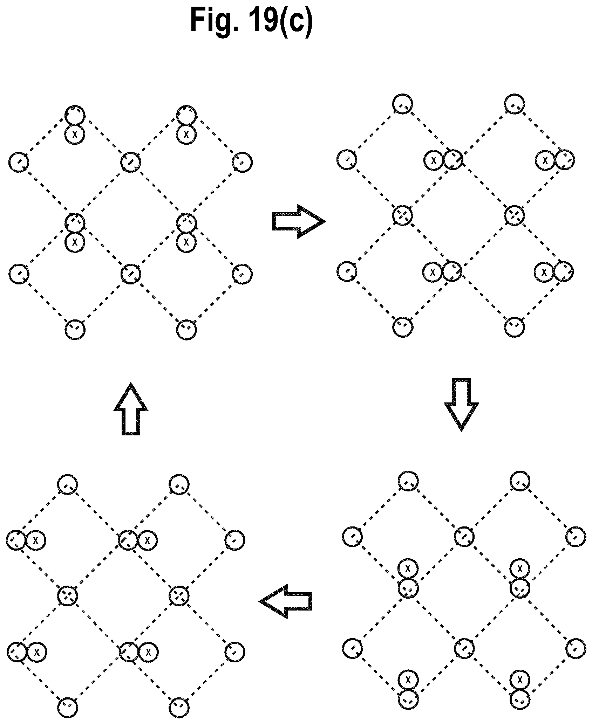

Fig. 19(c) shows a portion of a 2-dimensional lattice wherein an ancillary qubit similar to the ancillary particle of Fig. 19(b) is arranged at a subset of the plaquettes of the lattice. The subset of plaquettes on which an ancillary qubit is placed is the following. The plaquettes of the lattice can be colored with two colors ("black" and "white") in a manner such that any two plaquettes have the same color if they do not share an edge of the lattice ("2-coloring"). The subset of plaquettes considered with respect to Fig. 19(c) can be the set of all "white" plaquettes of the lattice. A plaquette operator $\exp(ic\sigma_z\otimes\sigma_z\otimes\sigma_z\otimes\sigma_z)$ can be performed for each plaquette in the subset, by shuttling the associated ancillary particles as described with respect to Figs. 19(a)-(b). Across all plaquettes of the subset, the movement of the ancillary qubit towards the "north" qubit of the associated plaquette, and the subsequent CNOT operation, can be performed in parallel since the CNOT operations in question act on different qubits in the system. Similarly, all "east", "south" and "west" movements can be performed in parallel. Repeating the same procedure for the subset of "black" plaquettes of the lattice results in the application of all plaquette operators $\exp(ic\sigma_z\otimes\sigma_z\otimes\sigma_z\otimes\sigma_z)$, i.e. across all plaquettes of the lattice. Accordingly, the shuttling of ancillary particles provides allows a large degree of parallelizability of the unitary operations. As a further advantage, each (non-ancillary) qubit is used in every second step and each ancillary qubit in every single step.

While Figs. 19(a)-(c) show the example of a two-dimensional square lattice with four-body plaquettes, other two-dimensional lattices (e.g. hexagonal lattice) can be treated in a similar manner.

In light of the above, embodiments described herein involve a method for performing a quantum computation by applying a sequence of quantum quenches represented by unitary operators that correspond to a driver Hamiltonian and a problem Hamiltonian, respectively. The number of iterations can be small and angles of each unitary are free parameters that are optimized via a classical feedback loop. The unitary operations applied to the quantum system may include nearest-neighbor CNOT operators and single qubit rotations only. Embodiments described herein allow solving all-to-all connected combinatorial optimization problems. By mapping the computational problem to a single-body problem Hamiltonian, the problem is fully determined by local fields, while interactions are uniform and problem-independent. Accordingly, embodiments described herein provide for a method of quantum computing wherein pair-wise unitary operators can be executed in parallel on a square lattice with nearest-neighbor connectivity. The unitary operators (gates) used for performing the quantum computation involve: (i) single-body unitary operations of the form $\exp(it\sigma_x)$, (ii) single-body unitary operations of the form $\exp(itc\sigma_z)$ and (iii) problem-independent interactions consisting of nearest-neighbor CNOT operations and qubit rotations. Embodiments described herein further introduce additional free parameters that may be used to increase the efficiency of the method.

While the foregoing is directed to some embodiments of the invention, other and further embodiments may be devised without departing from the scope determined by the claims that follow.


**Claims**

1. A method of performing a quantum computation, comprising:

> providing a quantum system (420) comprising a plurality of qubits (100), wherein the plurality of qubits are arranged on a 2-dimensional lattice (120), wherein the 2-dimensional lattice has a plurality of plaquettes;
> encoding a computational problem into a problem Hamiltonian of the quantum system, wherein the problem Hamiltonian is a single-body Hamiltonian comprising a plurality of adjustable parameters, wherein the encoding comprises determining, from the computational problem, a problem-encoding configuration for the plurality of adjustable parameters;
> performing N rounds of operations, wherein $N \geq 2$, wherein each round of operations comprises:

determining a sequence of unitary operators, wherein each unitary operator in the sequence is

a unitary operator being a unitary time evolution of the problem Hamiltonian, wherein the plurality of adjustable parameters of the problem Hamiltonian are in the problem-encoding configuration, or
a unitary operator being a product of two or more short-range unitary operators;

evolving the quantum system by applying the sequence of unitary operators to the quantum system; and performing a measurement of one or more qubits of the quantum system; and outputting a result of the quantum computation,

wherein the N rounds of operations include a first sequence of unitary operators, wherein the first sequence of unitary operators includes a unitary operator being a first product of two or more short-range unitary operators, wherein the quantum system comprises a plurality of ancillary particles, wherein each ancillary particle is an ancillary qubit, wherein each ancillary particle of the plurality of ancillary particles is located at a plaquette of the 2-dimensional lattice, wherein at least one short-range unitary operator is applied to a subgroup of the plurality of qubits by moving a first ancillary particle (1950) between different positions adjacent to the respective qubits in the subgroup of qubits, wherein the plurality of plaquettes include a first plaquette, wherein the method comprises:
coupling a first qubit (1942) of the first plaquette with the first ancillary particle;
moving the first ancillary particle from the first qubit to a second qubit (1944) of the first plaquette;
coupling the second qubit with the first ancillary particle;
moving the first ancillary particle from the second qubit to a third qubit (1946) of the first plaquette;
coupling the third qubit with the first ancillary particle;
moving the first ancillary particle from the third qubit to a fourth qubit (1948) of the first plaquette; and
coupling the fourth qubit with the first ancillary particle.

2. The method of claim 1, wherein the N rounds of operations include one or more adaptive rounds of operations, wherein, for each adaptive round of operations, the unitary operators of the sequence of unitary operators of the adaptive round are determined based on at least one measurement outcome of a measurement performed in a previous round of the N rounds of operations.

3. The method of any of the preceding claims, wherein each product of two or more short-range unitary operators comprised in the N rounds of operations is parallelizable to a constant depth.

4. The method of any of the preceding claims, wherein the sequence of unitary operators of each of the N rounds of operations is a sequence of alternations of the form $A_1 B_1 A_2 B_2 \ldots$ ,

wherein each $A_i$ is a unitary time evolution of the problem Hamiltonian, wherein the plurality of adjustable parameters of the problem Hamiltonian are in the problem-encoding configuration, and
wherein each $B_i$ is a product of two or more short-range unitary operators.

5. The method of any of the preceding claims, wherein the N rounds of operations include a first round of operations, wherein applying the sequence of unitary operators of the first round of operations results in a first quantum state of the quantum system, wherein the method comprises:
measuring an energy of the first quantum state.

6. The method of claim 5, wherein the N rounds of operations include a second round of operations performed after the first round of operations, wherein applying the sequence of unitary operators of the second round of operations results in a second quantum state of the quantum system, wherein the method comprises:

measuring an energy of the second quantum state;
comparing the energy of the first quantum state with the energy of the second quantum state; and
determining the sequence of unitary operators to be applied in a third round of the N rounds of operations, wherein the third round is to be performed after the second round, wherein the sequence of unitary operators to be applied in the third round is determined based at least on the comparison of the energy of the first quantum state with the energy of the second quantum state.

7. The method of any of the preceding claims, wherein the plurality of adjustable parameters of the problem Hamiltonian comprises a plurality of field strengths and/or a plurality of field directions of single-body fields acting on the plurality of qubits.

8. The method of any of the preceding claims, wherein the problem Hamiltonian has the form $\Sigma_k J_k \sigma_z^{(k)}$, wherein $\sigma_z^{(k)}$ is a Pauli operator of a k-th qubit of the plurality of qubits, wherein each $J_k$ is a coefficient, and wherein the coefficients $J_k$ form the plurality of adjustable parameters of the problem Hamiltonian.

9. The method of any of the preceding claims, wherein each short-range unitary operator of each of the N rounds of operations is either a 2-body unitary operator acting on adjacent qubits of the 2-dimensional lattice or a single-body unitary operator.

10. The method of any of the preceding claims, wherein each short-range operator of each of the N rounds is either a controlled-not operator or a single-body unitary operator.

11. The method of any of the preceding claims, wherein the computational problem is an NP-hard problem, particularly an Ising spin model problem, and wherein the outputted result of the quantum computation is a solution to the NP-hard problem.

12. An apparatus (400) for quantum computing, comprising:

a quantum system (420) comprising a plurality of qubits (100), wherein the plurality of qubits are arranged on a 2-dimensional lattice, wherein the 2-dimensional lattice has a plurality of plaquettes;
a classical computing system (450) configured for:

receiving, as an input, a computational problem (452); and
encoding the computational problem into a problem Hamiltonian of the quantum system, the problem Hamiltonian being a single-body Hamiltonian comprising a plurality of adjustable parameters, wherein the encoding comprises determining, from the computational problem, a problem-encoding configuration for the plurality of adjustable parameters;

a single-body processing device (432) connected to the classical computing system, the single-body processing device being configured for:

receiving, from the classical computing system, the problem-encoding configuration of the plurality of adjustable parameters; and
evolving the quantum system according to a time evolution of the problem Hamiltonian;

a short-range coupling device (434) connected to the classical computing system, the short-range coupling device being configured for evolving the quantum system according to a time evolution of one or more short-range Hamiltonians; and
a measurement device (440) connected to the classical computing system, the measurement device being configured to measure at least a portion of the plurality of qubits,
wherein the classical computing system is further configured for:

instructing the single-body processing device and/or the short-range coupling device;
receiving measurement outcomes from the measurement device;
outputting a result of the quantum computation,

wherein the apparatus is configured for performing N rounds of operations, wherein $N \geq 2$, wherein each round of operations comprises:

determining, using the classical computing system, a sequence of unitary operators, wherein each unitary operator in the sequence is

a unitary operator being a unitary time evolution of the problem Hamiltonian, wherein the plurality of adjustable parameters of the problem Hamiltonian are in the problem-encoding configuration, or
a unitary operator being a product of two or more short-range unitary operators;

evolving the quantum system by applying the sequence of unitary operators to the quantum system, wherein the single-body processing device is configured for performing each unitary operator of the sequence of unitary operators being a unitary time evolution of the problem Hamiltonian, and wherein the short-range coupling device is configured for performing each unitary operator of the sequence of unitary operators being a short-range operator; and

performing a measurement of one or more qubits of the quantum system using the measurement device,

wherein the N rounds of operations include a first sequence of unitary operators, wherein the first sequence of unitary operators includes a unitary operator being a first product of two or more short-range unitary operators, wherein the quantum system includes a plurality of ancillary particles, wherein each ancillary particle is an ancillary qubit, wherein each ancillary particle of the plurality of ancillary particles is located at a plaquette of the 2-dimensional lattice, wherein the plurality of plaquettes include a first plaquette, wherein the apparatus is configured for applying at least one short-range unitary operator to a subgroup of the plurality of qubits by moving a first ancillary particle (1950) between different positions adjacent to the respective qubits in the subgroup of qubits, including:

coupling a first qubit (1942) of the first plaquette with the first ancillary particle;
moving the first ancillary particle from the first qubit to a second qubit (1944) of the first plaquette;
coupling the second qubit with the first ancillary particle;
moving the first ancillary particle from the second qubit to a third qubit (1946) of the first plaquette;
coupling the third qubit with the first ancillary particle;
moving the first ancillary particle from the third qubit to a fourth qubit (1948) of the first plaquette; and
coupling the fourth qubit with the first ancillary particle.

**Patentansprüche**

1. Verfahren zur Durchführung einer Quantenberechnung, umfassend:

Bereitstellen eines Quantensystems (420), das eine Vielzahl von Qubits (100) umfasst, wobei die Vielzahl von Qubits auf einem 2-dimensionalen Gitter (120) angeordnet ist, wobei das 2-dimensionale Gitter eine Vielzahl von Plaquettes aufweist;
Kodieren eines Rechenproblems in einen Problem-Hamiltonian des Quantensystems, wobei der Problem-Hamiltonian ein Ein-Teilchen-Hamiltonian ist, der eine Vielzahl von einstellbaren Parametern umfasst, wobei das Kodieren das Bestimmen einer problemkodierenden Konfiguration für die Vielzahl von einstellbaren Parametern aus dem Rechenproblem umfasst;
Durchführen von N Runden von Operationen, wobei $N \geq 2$ ist, wobei jede Runde von Operationen umfasst:

Bestimmen einer Sequenz von unitären Operatoren, wobei jeder unitäre Operator in der Sequenz Folgendes ist:

ein unitärer Operator, der eine unitäre Zeitentwicklung des Problem-Hamiltonians ist, wobei sich die Vielzahl von einstellbaren Parametern des Problem-Hamiltonians in der problemkodierenden Konfiguration befindet, oder
ein unitärer Operator, der ein Produkt aus zwei oder mehr kurzreichweitigen unitären Operatoren ist;

Entwickeln des Quantensystems durch Anwenden der Sequenz von unitären Operatoren auf das Quantensystem; und
Durchführen einer Messung eines oder mehrerer Qubits des Quantensystems; und

Ausgeben eines Ergebnisses der Quantenberechnung,
wobei die N Runden von Operationen eine erste Sequenz von unitären Operatoren aufweisen, wobei die erste Sequenz von unitären Operatoren einen unitären Operator aufweist, der ein erstes Produkt aus zwei oder mehr kurzreichweitigen unitären Operatoren ist,
wobei das Quantensystem eine Vielzahl von Hilfspartikeln umfasst, wobei jedes Hilfspartikel ein Hilfsqubit ist, wobei jedes Hilfspartikel der Vielzahl von Hilfspartikeln an einer Plaquette des 2-dimensionalen Gitters angeordnet ist, wobei mindestens ein kurzreichweitiger unitärer Operator auf eine Untergruppe der Vielzahl von Qubits angewendet wird, indem ein erstes Hilfspartikel (1950) zwischen verschiedenen Positionen benachbart zu den jeweiligen Qubits in der Untergruppe von Qubits bewegt wird, wobei die Vielzahl von Plaquettes eine erste Plaquette aufweist, wobei das Verfahren umfasst:

Koppeln eines ersten Qubits (1942) der ersten Plaquette mit dem ersten Hilfspartikel;
Bewegen des ersten Hilfspartikels von dem ersten Qubit zu einem zweiten Qubit (1944) der ersten Plaquette;
Koppeln des zweiten Qubits mit dem ersten Hilfspartikel;
Bewegen des ersten Hilfspartikels von dem zweiten Qubit zu einem dritten Qubit (1946) der ersten Plaquette;
Koppeln des dritten Qubits mit dem ersten Hilfspartikel;
Bewegen des ersten Hilfspartikels von dem dritten Qubit zu einem vierten Qubit (1948) der ersten Plaquette; und
Koppeln des vierten Qubits mit dem ersten Hilfspartikel.

2. Verfahren nach Anspruch 1, wobei die N Runden von Operationen eine oder mehrere adaptive Runden von Operationen aufweisen, wobei für jede adaptive Runde von Operationen die unitären Operatoren der Sequenz von unitären Operatoren der adaptiven Runde basierend auf mindestens einem Messergebnis einer in einer vorherigen Runde der N Runden von Operationen durchgeführten Messung bestimmt werden.

3. Verfahren nach einem der vorhergehenden Ansprüche, wobei jedes in den N Runden von Operationen enthaltene Produkt aus zwei oder mehr kurzreichweitigen unitären Operatoren auf eine konstante Tiefe parallelisierbar ist.

4. Verfahren nach einem der vorhergehenden Ansprüche, wobei die Sequenz von unitären Operatoren jeder der N Runden von Operationen eine Sequenz von Abwechslungen der Form $A_1 B_1 A_2 B_2 \ldots$ ist,

   wobei jedes $A_i$ eine unitäre Zeitentwicklung des Problem-Hamiltonians ist, wobei sich die Vielzahl von einstellbaren Parametern des Problem-Hamiltonians in der problemkodierenden Konfiguration befindet, und wobei jedes $B_i$ ein Produkt aus zwei oder mehr kurzreichweitigen unitären Operatoren ist.

5. Verfahren nach einem der vorhergehenden Ansprüche, wobei die N Runden von Operationen eine erste Runde von Operationen aufweisen, wobei das Anwenden der Sequenz von unitären Operatoren der ersten Runde von Operationen zu einem ersten Quantenzustand des Quantensystems führt, wobei das Verfahren umfasst:
   Messen einer Energie des ersten Quantenzustands.

6. Verfahren nach Anspruch 5, wobei die N Runden von Operationen eine zweite Runde von Operationen aufweisen, die nach der ersten Runde von Operationen durchgeführt wird, wobei das Anwenden der Sequenz von unitären Operatoren der zweiten Runde von Operationen zu einem zweiten Quantenzustand des Quantensystems führt, wobei das Verfahren umfasst:

   Messen einer Energie des zweiten Quantenzustands;
   Vergleichen der Energie des ersten Quantenzustands mit der Energie des zweiten Quantenzustands; und
   Bestimmen der in einer dritten Runde der N Runden von Operationen anzuwendenden Sequenz von unitären Operatoren, wobei die dritte Runde nach der zweiten Runde durchzuführen ist, wobei die in der dritten Runde anzuwendende Sequenz von unitären Operatoren zumindest basierend auf dem Vergleichen der Energie des ersten Quantenzustands mit der Energie des zweiten Quantenzustands bestimmt wird.

7. Verfahren nach einem der vorhergehenden Ansprüche, wobei die Vielzahl von einstellbaren Parametern des Problem-Hamiltonians eine Vielzahl von Feldstärken und/oder eine Vielzahl von Feldrichtungen von Ein- Teilchen-Feldern umfasst, die auf die Vielzahl von Qubits wirken.

8. Verfahren nach einem der vorhergehenden Ansprüche, wobei der Problem-Hamiltonian die Form $\Sigma_k J_k \sigma_z^{(k)}$ aufweist, wobei $\sigma_z^{(k)}$ ein Pauli-Operator eines k-ten Qubits der Vielzahl von Qubits ist, wobei jedes $J_k$ ein Koeffizient ist und wobei die Koeffizienten $J_k$ die Vielzahl von einstellbaren Parametern des Problem-Hamiltonians bilden.

9. Verfahren nach einem der vorhergehenden Ansprüche, wobei jeder kurzreichweitige unitäre Operator jeder der N Runden von Operationen entweder ein Zwei-Teilchen-unitärer Operator, der auf benachbarte Qubits des 2-dimensionalen Gitters wirkt, oder ein Ein-Teilchen-unitärer Operator ist.

10. Verfahren nach einem der vorhergehenden Ansprüche, wobei jeder kurzreichweitige Operator jeder der N Runden entweder ein Controlled-NOT-Operator oder ein Ein-Teilchen-unitärer Operator ist.

11. Verfahren nach einem der vorhergehenden Ansprüche, wobei das Rechenproblem ein NP-schweres Problem ist, insbesondere ein Ising-Spin-Modell-Problem, und wobei das ausgegebene Ergebnis der Quantenberechnung eine Lösung für das NP-schwere Problem ist.

**12.** Vorrichtung (400) für Quantencomputing, umfassend:

ein Quantensystem (420), das eine Vielzahl von Qubits (100) umfasst, wobei die Vielzahl von Qubits auf einem 2-dimensionalen Gitter angeordnet ist, wobei das 2-dimensionale Gitter eine Vielzahl von Plaquettes aufweist; ein klassisches Rechensystem (450), das konfiguriert ist zum:

Empfangen eines Rechenproblems (452) als eine Eingabe; und
Kodieren des Rechenproblems in einen Problem-Hamiltonian des Quantensystems, wobei der Problem-Hamiltonian ein Ein-Teilchen-Hamiltonian ist, der eine Vielzahl von einstellbaren Parametern umfasst, wobei das Kodieren das Bestimmen einer problemkodierenden Konfiguration für die Vielzahl von einstellbaren Parametern aus dem Rechenproblem umfasst,

eine Ein-Teilchen-Verarbeitungsvorrichtung (432), die mit dem klassischen Rechensystem verbunden ist, wobei die Ein-Teilchen-Verarbeitungsvorrichtung konfiguriert ist zum:

Empfangen der problemkodierenden Konfiguration der Vielzahl von einstellbaren Parametern von dem klassischen Rechensystem; und
Entwickeln des Quantensystems gemäß einer Zeitentwicklung des Problem-Hamiltonians;

eine kurzreichweitige Kopplungsvorrichtung (434), die mit dem klassischen Rechensystem verbunden ist, wobei die kurzreichweitige Kopplungsvorrichtung dafür konfiguriert ist, das Quantsystem gemäß einer Zeitentwicklung eines oder mehrerer kurzreichweitiger Hamiltonians zu entwickeln; und
eine Messvorrichtung (440), die mit dem klassischen Rechensystem verbunden ist, wobei die Messvorrichtung dafür konfiguriert ist, zumindest einen Teil der Vielzahl von Qubits zu messen,
wobei das klassische Rechensystem ferner konfiguriert ist zum:

Anweisen der Ein-Teilchen-Verarbeitungsvorrichtung und/oder der kurzreichweitigen Kopplungsvorrichtung;
Empfangen von Messergebnissen von der Messvorrichtung;
Ausgeben eines Ergebnisses der Quantenberechnung,

wobei die Vorrichtung zur Durchführung von N Runden von Operationen konfiguriert ist, wobei $N \geq 2$ ist, wobei jede Runde von Operationen umfasst:

Bestimmen einer Sequenz von unitären Operatoren unter Verwendung des klassischen Rechensystems, wobei jeder unitäre Operator in der Sequenz Folgendes ist:

ein unitärer Operator, der eine unitäre Zeitentwicklung des Problem-Hamiltonians ist, wobei sich die Vielzahl von einstellbaren Parametern des Problem-Hamiltonians in der problemkodierenden Konfiguration befindet, oder
ein unitärer Operator, der ein Produkt aus zwei oder mehr kurzreichweitigen unitären Operatoren ist;

Entwickeln des Quantsystems durch Anwenden der Sequenz von unitären Operatoren auf das Quantensystem, wobei die Ein-Teilchen-Verarbeitungsvorrichtung dafür konfiguriert ist, jeden unitären Operator der Sequenz von unitären Operatoren auszuführen, der eine unitäre Zeitentwicklung des Problem-Hamiltonians ist, und wobei die kurzreichweitige Kopplungsvorrichtung dafür konfiguriert ist, jeden unitären Operator der Sequenz von unitären Operatoren auszuführen, der ein kurzreichweitiger Operator ist; und
Durchführen einer Messung eines oder mehrerer Qubits des Quantensystems unter Verwendung der Messvorrichtung,

wobei die N Runden von Operationen eine erste Sequenz von unitären Operatoren aufweisen, wobei die erste Sequenz von unitären Operatoren einen unitären Operator aufweist, der ein erstes Produkt aus zwei oder mehr kurzreichweitigen unitären Operatoren ist,
wobei das Quantensystem eine Vielzahl von Hilfspartikeln aufweist, wobei jedes Hilfspartikel ein Hilfsqubit ist, wobei jedes Hilfspartikel der Vielzahl von Hilfspartikeln an einer Plaquette des 2-dimensionalen Gitters angeordnet ist, wobei die Vielzahl von Plaquettes eine erste Plaquette aufweist, wobei die Vorrichtung dafür konfiguriert ist, mindestens einen kurzreichweitigen unitären Operator auf eine Untergruppe der Vielzahl von Qubits anzuwenden, indem ein erstes Hilfspartikel (1950) zwischen verschiedenen Positionen benachbart zu den jeweiligen Qubits in der Untergruppe von Qubits bewegt wird, umfassend:

Koppeln eines ersten Qubits (1942) der ersten Plaquette mit dem ersten Hilfspartikel;
Bewegen des ersten Hilfspartikels von dem ersten Qubit zu einem zweiten Qubit (1944) der ersten Plaquette;
Koppeln des zweiten Qubits mit dem ersten Hilfspartikel;
Bewegen des ersten Hilfspartikels von dem zweiten Qubit zu einem dritten Qubit (1946) der ersten Plaquette;
Koppeln des dritten Qubits mit dem ersten Hilfspartikel;
Bewegen des ersten Hilfspartikels von dem dritten Qubit zu einem vierten Qubit (1948) der ersten Plaquette; und
Koppeln des vierten Qubits mit dem ersten Hilfspartikel.

**Revendications**

1. Procédé d'exécution d'un calcul quantique, comprenant les étapes consistant à :

   utiliser un système quantique (420) comprenant une pluralité de qubits (100), dans lequel les qubits de la pluralité de qubits sont disposés sur une grille bidimensionnelle (120), dans lequel la grille bidimensionnelle comporte une pluralité de plaquettes ;
   coder un problème computationnel en un hamiltonien de problème du système quantique, dans lequel l'hamiltonien de problème est un hamiltonien à un seul corps comprenant une pluralité de paramètres réglables, dans lequel l'étape de codage consiste à déterminer, à partir du problème computationnel, une configuration de codage de problème de la pluralité de paramètres réglables ;
   exécuter N séries d'opérations, dans lequel N ≥ 2, dans lequel chaque série d'opérations consiste à :

   déterminer une séquence d'opérateurs unitaires, dans lequel chaque opérateur unitaire de la séquence est

   un opérateur unitaire qui est une évolution temporelle unitaire de l'hamiltonien de problème, dans lequel les paramètres de la pluralité de paramètres réglables de l'hamiltonien de problème sont dans la configuration de codage de problème, ou
   un opérateur unitaire qui est un produit d'au moins deux paramètres unitaires de courte distance ;

   faire évoluer le système quantique par application de la séquence d'opérateurs unitaires au système quantique ; et
   effectuer une mesure d'un ou de plusieurs qubits du système quantique ; et

   délivrer un résultat du calcul quantique,
   dans lequel les N séries d'opérations comprennent une première séquence d'opérateurs unitaires, dans lequel la première séquence d'opérateurs unitaires comprend un opérateur unitaire qui est un premier produit d'au moins deux opérateurs unitaires de courte distance,
   dans lequel le système quantique comprend une pluralité de particules auxiliaires, dans lequel chaque particule auxiliaire est un qubit auxiliaire, dans lequel chaque particule auxiliaire de la pluralité de particules auxiliaires est située au niveau d'une plaquette de la grille bidimensionnelle, dans lequel au moins un opérateur unitaire de courte distance est appliqué à un sous-groupe de qubits de la pluralité de qubits par déplacement d'une première particule auxiliaire (1950) entre différentes positions adjacentes aux qubits respectifs du sous-groupe de qubits,
   dans lequel la pluralité de plaquettes comprend une première plaquette, dans lequel le procédé comprend les étapes consistant à :
   coupler un premier qubit (1942) de la première plaquette à la première particule auxiliaire ;
   déplacer la première particule auxiliaire du premier qubit jusqu'à un deuxième qubit (1944) de la première plaquette ;
   coupler le deuxième qubit à la première particule auxiliaire ;
   déplacer la première particule auxiliaire du deuxième qubit jusqu'à un troisième qubit (1946) de la première plaquette ;
   coupler le troisième qubit à la première particule auxiliaire ;
   déplacer la première particule auxiliaire du troisième qubit jusqu'à un quatrième qubit (1948) de la première plaquette ; et
   coupler le quatrième qubit à la première particule auxiliaire.

2. Procédé selon la revendication 1, dans lequel les N séries d'opérations comprennent une ou plusieurs séries adaptatives d'opérations, dans lequel, pour chaque série adaptative d'opérations, les opérateurs unitaires de la séquence d'opérateurs unitaires de la série adaptative sont déterminés sur la base d'au moins un résultat de mesure d'une mesure effectuée lors d'une série précédente des N séries d'opérations.

3. Procédé selon l'une quelconque des revendications précédentes, dans lequel chaque produit d'au moins deux opérateurs unitaires de courte distance compris dans les N séries d'opérations est parallélisable à une profondeur constante.

4. Procédé selon l'une quelconque des revendications précédentes, dans lequel la séquence d'opérateurs unitaires de chacune des N séries d'opérations est une séquence d'unions de la forme $A_1B_1 A_2B_2...$,

dans lequel chaque $A_i$ est une évolution temporelle unitaire de l'hamiltonien de problème, dans lequel les paramètres de la pluralité de paramètres réglables de l'hamiltonien de problème sont dans la configuration de codage de problème, et
dans lequel chaque $B_i$ est un produit d'au moins deux opérateurs unitaires de courte distance.

5. Procédé selon l'une quelconque des revendications précédentes, dans lequel les N séries d'opérations comprennent une première série d'opérations, dans lequel le fait d'appliquer la séquence d'opérateurs unitaires de la première série d'opérations a pour conséquence un premier état quantique du système quantique, dans lequel le procédé comprend l'étape consistant à :
mesurer une énergie du premier état quantique.

6. Procédé selon la revendication 5, dans lequel les N séries d'opérations comprennent une deuxième série d'opérations effectuées après la première série d'opérations, dans lequel le fait d'appliquer la séquence d'opérateurs unitaires de la deuxième série d'opérations a pour conséquence un second état quantique du système quantique, dans lequel le procédé comprend les étapes consistant à :

mesurer une énergie du second état quantique ;
comparer l'énergie du premier état quantique à l'énergie du second état quantique ; et
déterminer la séquence d'opérateurs unitaires à appliquer lors d'une troisième série des N séries d'opérations, dans lequel la troisième série doit être effectuée après la deuxième série, dans lequel la séquence d'opérateurs unitaires à appliquer lors de la troisième série est déterminée sur la base au moins de la comparaison de l'énergie du premier état quantique à l'énergie du second état quantique.

7. Procédé selon l'une quelconque des revendications précédentes, dans lequel les paramètres de la pluralité de paramètres réglables de l'hamiltonien de problème comprennent une pluralité d'intensités de champ et/ou une pluralité de directions de champ de champs à un seul corps agissant sur la pluralité de qubits.

8. Procédé selon l'une quelconque des revendications précédentes, dans lequel l'hamiltonien de problème a la forme $\Sigma_k J_k \sigma_z^{(k)}$, dans lequel $\sigma_z^{(k)}$ est un opérateur de Pauli d'un $k^{ième}$ qubit de la pluralité de qubits, dans lequel chaque $J_k$ est un coefficient, et dans lequel les coefficients $J_k$ forment la pluralité de paramètres réglables de l'hamiltonien de problème.

9. Procédé selon l'une quelconque des revendications précédentes, dans lequel chaque opérateur unitaire de courte distance de chacune des N séries d'opérations est soit un opérateur unitaire à deux corps agissant sur des qubits adjacents de la grille bidimensionnelle soit un opérateur unitaire à un seul corps.

10. Procédé selon l'une quelconque des revendications précédentes, dans lequel chaque opérateur de courte distance de chacune des N séries est soit un opérateur NON commandé soit un opérateur unitaire à un seul corps.

11. Procédé selon l'une quelconque des revendications précédentes, dans lequel le problème computationnel est un problème NP-dur, particulièrement un problème de modèle de spins d'Ising, et dans lequel le résultat délivré du calcul quantique est une solution au problème NP-dur.

12. Appareil (400) de calcul quantique, comprenant :

un système quantique (420) comprenant une pluralité de qubits (100), dans lequel les qubits de la pluralité de qubits sont disposés sur une grille bidimensionnelle, dans lequel la grille bidimensionnelle comporte une pluralité de plaquettes ;

un système informatique classique (450) configuré pour :

recevoir, en tant qu'entrée, un problème computationnel (452) ; et
coder le problème computationnel en un hamiltonien de problème du système quantique, l'hamiltonien de problème étant un hamiltonien à un seul corps comprenant une pluralité de paramètres réglables, dans lequel le codage consiste à déterminer, à partir du problème computationnel, une configuration de codage de problème de la pluralité de paramètres réglables ;

un dispositif de traitement à un seul corps (432) connecté au système informatique classique, le dispositif de traitement à un seul corps étant configuré pour :

recevoir, en provenance du système informatique classique, la configuration de codage de problème des paramètres de la pluralité de paramètres réglables ; et
faire évoluer le système quantique conformément à une évolution temporelle de l'hamiltonien de problème ;

un dispositif de couplage de courte distance (434) connecté au système informatique classique, le dispositif de couplage de courte distance étant configuré pour faire évoluer le système quantique conformément à une évolution temporelle d'un ou de plusieurs hamiltoniens de courte distance ; et
un dispositif de mesure (440) connecté au système informatique classique, le dispositif de mesure étant configuré pour mesurer au moins une partie des qubits de la pluralité de qubits,
dans lequel le système informatique classique est en outre configuré pour :

donner un ordre au dispositif de traitement à un seul corps et/ou au dispositif de couplage de courte distance ;
recevoir des résultats de mesure en provenance du dispositif de mesure ;
délivrer un résultat du calcul quantique,

dans lequel l'appareil est configuré pour effectuer N séries d'opérations, dans lequel N $\geq$ 2, dans lequel chaque série d'opérations consiste à :

déterminer, au moyen du système informatique classique, une séquence d'opérateurs unitaires, dans lequel chaque opérateur unitaire de la séquence est

un opérateur unitaire qui est une évolution temporelle unitaire de l'hamiltonien de problème, dans lequel les paramètres de la pluralité de paramètres réglables de l'hamiltonien de problème sont dans la configuration de codage de problème, ou
un opérateur unitaire qui est un produit d'au moins deux paramètres unitaires de courte distance ;

faire évoluer le système quantique par application de la séquence d'opérateurs unitaires au système quantique, dans lequel le dispositif de traitement à un seul corps est configuré pour exécuter chaque opérateur unitaire de la séquence d'opérateurs unitaires qui est une évolution temporelle unitaire de l'hamiltonien de problème, et dans lequel le dispositif de couplage de courte distance est configuré pour exécuter chaque opérateur unitaire de la séquence d'opérateurs unitaires qui est un opérateur de courte distance ; et

effectuer une mesure d'un ou de plusieurs qubits du système quantique au moyen du dispositif de mesure,
dans lequel les N séries d'opérations comprennent une première séquence d'opérateurs unitaires, dans lequel la première séquence d'opérateurs unitaires comprend un opérateur unitaire qui est un premier produit d'au moins deux opérateurs unitaires de courte distance,
dans lequel le système quantique comprend une pluralité de particules auxiliaires, dans lequel chaque particule auxiliaire est un qubit auxiliaire, dans lequel chaque particule auxiliaire de la pluralité de particules auxiliaires est située au niveau d'une plaquette de la grille bidimensionnelle, dans lequel la pluralité de plaquettes comprend une première plaquette, dans lequel l'appareil est configuré pour appliquer au moins un opérateur unitaire de courte distance à un sous-groupe de qubits de la pluralité de qubits par déplacement d'une première particule auxiliaire (1950) entre différentes positions adjacentes aux qubits respectifs du sous-groupe de qubits, y compris pour :
coupler un premier qubit (1942) de la première plaquette à la première particule auxiliaire ;
déplacer la première particule auxiliaire du premier qubit jusqu'à un deuxième qubit (1944) de la première plaquette ;

coupler le deuxième qubit à la première particule auxiliaire ;

déplacer la première particule auxiliaire du deuxième qubit jusqu'à un troisième qubit (1946) de la première plaquette ;

coupler le troisième qubit à la première particule auxiliaire ;

déplacer la première particule auxiliaire du troisième qubit jusqu'à un quatrième qubit (1948) de la première plaquette ; et

coupler le quatrième qubit à la première particule auxiliaire.

## Fig. 1

## Fig. 2

## Fig. 3

221    222    223    120    224

201    225    202    226    203    227

205    228    206    229    207

208    230    209

210

# Fig. 4

100

# Fig. 5

392                              120              302

100

310

320

362  364

368

366

391

350

350

301

# Fig. 6

# Fig. 7

# Fig. 8

# Fig. 9

# Fig. 10

# Fig. 11

100

16 (1)

120

15 (0)  26 (0)

14 (1)  25 (1)  36 (1)  • • •

13 (1)  24 (0)  35 (0)  46 (1)  425

12 (0)  23 (0)  34 (1)  45 (0)  56 (0)

(1)  (1)  (1)  (1)

1101

(0) = |0>    (1) = |1>

# Fig. 12

# (0) = 0, 2, 4

**Fig. 13**

16

15    26

14    25    36

13    24    35    46

12    23    34    45    56

**Fig. 14**

1420

1420

1410    1410

1410    1410

1410    1410

1410    1410

# Fig. 15

# Fig. 16

# Fig. 17

# Fig. 18(a)

# Fig. 18(b)

# Fig. 18(c)

## Fig. 18(d)

# Fig. 19(a)

# Fig. 19(b)

# Fig. 19(c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3113084 A1

**Non-patent literature cited in the description**

- Quantum approximate optimization with parallelizable gates. **LECHNER, W.** Arxiv.org. Cornell University Library, 04 February 2018
- Creation, manipulation, and detection of Abelian and non-Abelian anyons in optical lattices. **AGUADO et al.** Arxiv.org. Cornell University Library, 21 February 2008
- Hybrid quantum computing with ancillas. **PROCTOR et al.** Arxiv.org. Cornell University Library, 01 April 2016